# FASCICULE DE BREVET EUROPEEN

(11) **EP 1 194 895 B1**
(45) Date de publication et mention de la délivrance du brevet: **07.05.2003**
(21) Numéro de dépôt: 00942168.6
(22) Date de dépôt: 07.06.2000
(51) Int. Cl.: G06T 9/00

(54) **COMPRESSION ET CODAGE DE RESEAU MAILLE TRIDIMENSIONNEL**
3D MASCHENKOMPRESSION UND -KODIERUNG
COMPRESSION AND CODING OF THREE-DIMENSIONAL MESHED NETWORK

(30) Priorité: 10.06.1999 FR 9907608
(43) Date de publication de la demande: 10.04.2002
(73) Titulaire: FRANCE TELECOM, 75015 Paris (FR); TELEDIFFUSION DE FRANCE, 75732 Paris Cédex 15 (FR)
(72) Inventeur: LAURENT-CHATENET, Nathalie, F-35700 Rennes (FR); ALLIEZ, Pierre, F-35510 Cesson Sevigne (FR)
(74) Mandataire: Vidon, Patrice
(86) Numéro de dépôt international: FR0001563
(87) Numéro de publication internationale: WO00077737

(56) Documents cités:
- WO-A-99/35615
- TOUMA C ET AL: "Triangle mesh compression" PROCEEDINGS GRAPHICS INTERFACE '98, PROCEEDINGS OF GRAPHICS INTERFACE '98, VANCOUVER, BC, CANADA, 18-20 JUNE 1998, pages 26-34, XP000867195 1998, Toronto, Ont., Canada, Canadian Inf. Process. Soc, Canada ISBN: 0-9695338-7-X cité dans la demande
- LI J ET AL: "Progressive compression of 3D graphic models" PROCEEDINGS IEEE INTERNATIONAL CONFERENCE ON MULTIMEDIA COMPUTING AND SYSTEMS '97 (CAT. NO.97TB100141), PROCEEDINGS OF IEEE INTERNATIONAL CONFERENCE ON MULTIMEDIA COMPUTING AND SYSTEMS, OTTAWA, ONT., CANADA, 3-6 JUNE 1997, pages 135-142, XP002103512 1997, Los Alamitos, CA, USA, IEEE Comput. Soc, USA ISBN: 0-8186-7819-4

## Description

### 1. Domaine de l'invention et applications

### 1.1 Domaine de l'invention

Le domaine de l'invention est celui du codage des scènes en trois dimensions (3D) ou des images par maillages, comprenant des structures de données géométriques ou maillages. notamment de grandes tailles. Plus précisément, l'invention concerne la compression de la géométrie de tels maillages.

Les maillages constituent le support de représentation des objets dans une scène de réalité virtuelle. Ils représentent ainsi la majeure partie de la quantité d'informations décrivant une telle scène. Classiquement, un maillage est défini par un ensemble de sommets et de faces (ou un ensemble de sommets, d'arêtes et d'orientations) définissant une topologie.

Le traitement d'un maillage source, en vue de sa transmission vers un terminal distant et/ou de son stockage, comprend très généralement trois grandes phases :
- la simplification du maillage, consistant à réduire le nombre de triangles ou d'éléments formant le maillage source ;
- l'approximation du maillage, consistant à trouver un maillage approximé de moindre complexité géométrique que le maillage source, tout en s'approchant au mieux de la géométrie de ce dernier, au sens d'un critère prédéfini ;
- le codage du maillage obtenu, avec une résolution donnée, un volume de données fixé et/ou une distorsion maximale.

Un exemple de simplification d'un maillage est donné par exemple dans la demande de brevet FR - 99 00304, au nom des mêmes titulaires que la présente demande de brevet, et ayant pour titre « procédé de simplification d'un maillage source tenant compte de la courbure locale et de la dynamique géométrique locale, et applications correspondantes ».

Un exemple d'approximation de maillage peut quant à lui être trouvé dans la demande de brevet FR - 98 13090, également au nom des mêmes titulaires et ayant pour titre « procédé de codage d'un maillage source par minimisation de volume et applications correspondantes ».

L'invention concerne plus précisément la troisième phase, à savoir la compression du maillage, de façon à réduire la quantité de données nécessaires pour reconstruire le maillage, avec une résolution prédéterminée.

### 1.2 Exemples d'applications

L'invention trouve des applications dans tous les domaines où il est souhaitable de réduire la quantité d'informations nécessaires pour représenter et/ou manipuler efficacement un objet en trois dimensions, ou un ensemble d'objets, par exemple pour l'analyser, le stocker, le transmettre et/ou l'afficher.

A titre indicatif, l'invention peut notamment s'appliquer aux domaines de :
- la réalité virtuelle (visites ou boutiques virtuelles, loisirs, télémanipulation, réalité virtuelle distribuée ou partagée, ...). Il peut par exemple s'agir de jeux en réseaux, qui présentent un réel attrait, depuis l'apparition de matériels et de réseaux permettant la transmission et l'affichage interactif (ou temps réel) de scènes 3D complexes ;
- le calcul et/ou la simulation scientifique (éléments finis, CAO, etc...) ;
- la modélisation (scanner 3D (reconstruction de surfaces à partir de points non organisés), scanners volumiques, en construction de surfaces à partir de photos stéréoscopiques ou de séquences vidéos, de modèles numériques de terrains (imagerie satellite ou radar), etc...).

### 2. Art antérieur

Classiquement, la compression d'un maillage agit sur les données d'attribut du maillage (les positions des sommets par exemple) et/ou sur les données des structures (la topologie) du maillage.

Ainsi, une méthode basée sur des arbres de parcours sur les faces a été présentée par Gabriel Taubin, William Horn, Francis Lazarus et Jarek Rossignac dans le document « geometry coding and VRML - rapport technique n° 20925 », juillet 1997 (IBM T.J. Watson Research Center). Une autre méthode, basée sur la technique du pivot, est décrite par Costa Touma et Craig Gotsman dans « triangle mesh compression » (Interface 98 Conference Proceedings, 1998).

Ces techniques connues présentent notamment l'inconvénient d'une limite inférieure de taux de compression fixes, inhérente à la méthode elle-même. Ainsi, les auteurs de ces documents indiquent qu'il n'est pas possible d'obtenir un taux inférieur à 1 bit/face pour les méthodes basées sur des arbres de parcours, et 0,2 bit/face pour les méthodes connues basées sur la technique du pivot.

Par ailleurs, selon les cas, ces méthodes connues peuvent s'avérer insuffisantes en vitesse, en robustesse et/ou en coût mémoire. Enfin, elles supposent des capacités de traitement et de stockage importantes dans les décodeurs.

Jarek Rossignac a publié également une autre compresion, dans l'article "Edgebreaker: Connectivity Compression for triangle Mesh (IEEE Transactions on Vizualization and Computer Graphics, Janvier 1999- Mars 1999, Vol. n° 1, pp. 47 à 61). Cependant, cette technique ne permet d'obtenir un taux de compression que de l'ordre de 1,5 bits/face.

Ce document divulgue la conquête progressive de triangles adjacents à partir d'un "pivot courant" et le marquage des triangles non encore visités, suivant une orientation topologique prédéterminée.

### 3. Objectifs de l'invention

L'invention a notamment pour objectif de pallier ces différents inconvénients des techniques de l'art antérieur.

L'invention s'inspire en particulier des travaux de Touma et Gotsman, dans le sens où elle concerne également une technique mettant en oeuvre une conquête sur les arêtes autour de pivots successifs.

Un objectif de l'invention est ainsi de fournir un procédé de codage et un procédé de décodage correspondant, qui permette d'obtenir un taux de compression moyen meilleur que celui des techniques connues.

Un autre objectif de l'invention est de fournir un tel procédé de codage, présentant de bonnes qualités de vitesse, de robustesse et/ou de coût mémoire.

L'invention a également pour objectif de fournir un tel procédé de codage, assurant un codage échelonnable des positions, de façon à permettre une reconstruction progressive du maillage, avec une qualité de reconstruction s'améliorant progressivement.

Un autre objectif de l'invention est de fournir un tel procédé, qui permette de mettre en oeuvre un décodage simplifié. En d'autres termes, l'invention a pour objectif de permettre des gains en vitesse et en mémoire sur le décodeur.

### 4. Caractéristiques principales de l'invention

Ces objectifs, ainsi que d'autres qui apparaîtront plus clairement par la suite, sont atteints selon l'invention à l'aide d'un procédé de codage d'un maillage représentatif d'un objet en trois dimensions (3D), ledit maillage étant constitué d'un arrangement de sommets, définis par leur position dans l'espace, et de faces triangulaires, définies chacune par trois références aux sommets qu'elle relie, et présentant trois arêtes reliant chacune deux desdits sommets, une adjacence complète étant construite sur lesdits sommets, lesdites faces et lesdites arêtes lors de l'initialisation dudit codage .

Selon l'invention, ledit procédé comprend une étape de codage de la topologie desdits sommets et une étape de codage de la position desdits sommets, ladite étape de codage de la topologie comprenant :
(a) une initialisation du processus de codage, comprenant la détermination d'une face germe et d'un pivot germe ;
(b) une conquête des arêtes adjacentes au sommet pivot courant, suivant une orientation topologique prédéterminée ;
(c) une sélection d'un nouveau sommet pivot courant, sélectionnant en tant que sommet pivot un sommet dont toutes les arêtes sont marquées (une arête étant marquée lorsqu'elle a été conquise), ou sommet complet, lorsqu'un tel sommet est accessible, et le sommet suivant le sommet pivot courant sinon.

Ainsi, l'invention propose une nouvelle stratégie de conquête, privilégiant les sommets complets. Par rapport aux techniques antérieures, on propose donc une modification de la stratégie de parcours des graphes constituant les maillages : en encourageant les sommets complets comme candidat au pivot, on constate l'obtention d'un gain moyen de l'ordre de 35% en terme de compression sur la topologie, et d'un facteur 10, voire plus, dans le cas de maillages très réguliers.

De façon avantageuse, on traite spécifiquement les sommets contextuellement complets, un sommet étant contextuellement complet lorsqu'il n'y a aucune arête non conquise dans le secteur angulaire orienté dans le sens à ladite orientation topologique prédéterminée et défini par deux arêtes reliant ledit sommet et, respectivement, le sommet précédent et le sommet suivant dans la liste de référence correspondante.

Cela permet une synchronisation parfaite entre le codeur et le décodeur, lorsque ce dernier ne dispose pas des informations classiques d'adjacences. En d'autres termes, pour un coût de compression légèrement supérieur (de l'ordre de 2 %), on simplifie fortement le décodage : ce dernier nécessite en effet alors une structure de données très réduite, puisqu'aucune structure d'adjacence ni d'arêtes n'est requise. Cela entraîne des gains en vitesse et en mémoire très significatifs sur le décodeur.

Selon un mode de réalisation avantageux de l'invention, ladite étape de codage de la topologie utilise un ensemble de listes d'arêtes, organisé sous la forme d'une pile, une seule liste, dite liste active, étant utilisée à un instant donné, contenant une information relative à un sommet pivot et au nombre d'arêtes, ou valence, associé à chacun des sommets consécutifs considérés lors de ladite conquête.

Dans ce cas, la liste active est initialisée par les arêtes d'une face germe et un sommet initiateur est choisi comme pivot.

De façon préférentielle, ladite étape de codage de la topologie met en oeuvre une conquête de l'ensemble des arêtes situées autour dudit pivot courant de la liste active en traitant ses sommets voisins, et une génération d'un code de valence pour chacun desdits sommets voisins, représentatif du nombre de sommets adjacents auxdits sommets voisins, et, le cas échéant, d'un code spécifique, représentatif d'une particularité, pour ledit sommet pivot courant.

Avantageusement, lorsqu'au cours de ladite étape (b) on rencontre une arête reliant deux sommets appartenant à ladite liste active, cette dernière est séparée en deux listes à la position du sommet pivot courant, une sous-liste, dite liste fermée ou boucle, entourant les triangles dont les arêtes ne sont pas conquises, étant créée, et élevée dans ladite pile.

Dans ce cas, un code spécifique peut être généré, ainsi qu'un code de saut en position signé correspondant au nombre d'arêtes à parcourir dans ladite sous-liste.

De même, lorsqu'au cours de ladite étape (b), on rencontre une arête reliant ledit sommet pivot courant à un sommet voisin appartenant à une liste contenue dans ladite pile, dite liste inactive, on peut avantageusement fusionner ladite liste active et ladite liste inactive, cette dernière étant supprimée de ladite pile.

A nouveau, un code spécifique est alors généré, ainsi que deux codes correspondant à l'index en position dudit sommet voisin et à l'index de ladite liste inactive

Lesdites particularités appartiennent avantageusement au groupe comprenant :
- les sommets appartenant au bord dudit maillage ;
- les sommets contextuellement complets ;
- les fusions de listes ;
- les séparations de liste.

De façon avantageuse, on prévoit que ladite étape de codage de la topologie génère un code spécifique, dit code fantôme, pour le codage des bords dudit maillage, un sommet pivot courant situé sur un bord dudit maillage conquérant une arête virtuelle le reliant à un sommet fantôme, associé audit code fantôme, afin de conserver l'information de contour liée aux sommets adjacents dudit sommet pivot courant.

Les valeurs possibles dans ladite liste active peuvent alors être les suivantes :
- entiers supérieurs ou égaux à 4 : valence d'un sommet, décalée d'une unité ;
- 0 : code indiquant l'insertion d'une occurrence dudit sommet fantôme ;
- 1 : code indiquant la séparation de ladite liste active en deux listes ;
- 2 : code indiquant la fusion de deux listes ;
- 3 : code indiquant la présence d'un sommet contextuellement complet.

Selon un aspect particulier de l'invention, ladite étape de codage de la topologie comprend une étape de sélection du premier sommet pivot, dit sommet initiateur, selon laquelle on retient comme sommet initiateur un sommet appartenant au bord dudit maillage, lorsque ce dernier existe.

Ledit sommet initiateur est avantageusement, parmi l'ensemble des sommets appartenant au bord dudit maillage (ou audit maillage, en l'absence de bord), celui qui présente la valence la plus élevée.

Préférentiellement, les valeurs contenues dans ladite liste active sont codées à l'aide d'un codeur entropique à modèle adaptatif.
Le codeur entropique est également avantageusement utilisé pour les valeurs absolues des sauts de position des séparations de listes. En revanche, on ne prévoit pas de compression pour les sauts en index dans la pile de listes relatifs aux fusions, ces derniers étant très peu courants.

Selon un aspect avantageux de l'invention, on soustrait systématiquement le nombre 2 aux valeurs de saut en position de séparation de listes codées par ledit codeur entropique. En effet, il ne se produit pas de séparation avec un nombre inférieur ou égal à cette valeur.

L'invention concerne également, avantageusement, le codage des positions. Ainsi, ladite étape de codage des positions met en oeuvre, de façon préférentielle, un codage par prédiction de la position d'un sommet donné, en fonction de la position de sommets précédemment codés.

On exploite ainsi avantageusement l'ordonnancement des sommets fourni par le codage de topologie

Préférentiellement, ladite étape de prédiction de la position utilise au moins une des prédictions appartenant au groupe comprenant :
- une prédiction suivant la méthode du parallélogramme, si le sommet considéré appartient à une région oscillante ;
- une prédiction linéaire, si le sommet considéré appartient à une zone de type régulier ;
- une simple différence, lorsque aucune des deux précédentes prédictions ne diminue l'excursion du résidu ;
- un code d'accident, pour signaler les ruptures d'adjacence.

Suivant le type dudit maillage source, un classement des prédictions est réalisé par la mise en place d'un codage dont le coût est inversement proportionnel à la probabilité d'une desdites prédictions. Les prédictions sont donc codées en moyenne sur moins de deux bits, et peuvent être également compressées par codage entropique.

De façon avantageuse, ladite étape de codage des positions met en oeuvre un codage des résidus après prédiction, dits résidus de prédiction.

Dans ce cas, ladite étape de codage des résidus de prédiction peut normaliser lesdits résidus grâce à un calcul de moyenne mobile suivant des longueurs d'arêtes successives.
Préférentiellement, ladite moyenne mobile est calculée sur les longueurs de N arêtes associées aux valeurs des positions des sommets précédant le sommet dont la position est à coder. Selon un mode de réalisation particulier, N vaut 3.

Ladite étape de codage des positions met avantageusement en oeuvre une étape de quantification des valeurs absolues des résidus de prédiction, les bits de signe desdits résidus de prédiction étant transmis indépendamment, sans compression. Il peut notamment s'agir d'une quantification linéaire, ou non linéaire de type "compandor/expandor".

Ladite étape de quantification des résidus de prédiction tient compte, de façon préférentielle, d'un choix préalable de l'utilisateur de la précision, en nombre de bits souhaité, pour chacun desdits résidus de prédiction, afin d'obtenir une première estimation plus ou moins grossière du maillage.

Avantageusement, ladite étape de codage des résidus de prédiction des positions met en oeuvre un codage entropique desdits résidus, similaire au codage entropique mis en oeuvre lors de ladite étape de codage de la topologie.

Selon un aspect particulier de l'invention, lesdits accidents peuvent être codés sous la forme d'un ratio entier d'un vecteur voisin de la moyenne vectorielle mobile et d'un résidu associé codé comme un résidu différentiel, lesdits ratios entiers étant compressés par codage entropique.

On peut avantageusement prendre en compte la différence entre lesdits résidus exacts des prédictions des positions et lesdits résidus quantifiés desdites prédictions de positions, dits résidus différentiels.

Dans ce cas, on effectue avantageusement les opérations suivantes :
- normalisation desdits résidus différentiels entre 0 et 1 ;
- transmission indépendante et sans compression des bits de signe desdits résidus différentiels ;
- expansion binaire pour chacune des valeurs absolues desdits résidus différentiels normalisés.

Préférentiellement, ladite étape de codage desdits résidus différentiels détermine la position du premier 1 rencontré dans chacune desdites expansions binaires desdits résidus différentiels, ou ordre de grandeur, et met en oeuvre un codage entropique desdits ordres de grandeur.

Ce codage permet de transmettre le nombre de zéros rencontrés avant le premier 1, et donc de parcourir en profondeur chacune des expansions binaires desdits résidus, permet donc pour une seule valeur transmise pour chaque résidu une amélioration notable (premier raffinement) dudit maillage.

Lesdites étapes de raffinement successives consistent avantageusement à transmettre les bits de raffinement des résidus différentiels en réalisant un parcours complet, dans l'ordre des sommets, un bit par sommet.

Dans ce cas, préférentiellement, on transmet pour chacun desdits niveaux de raffinements, l'ensemble des bits de raffinement correspondant à un ordre de grandeur.
L'invention concerne également un procédé de décodage de maillages codés selon la technique présentée ci-dessus. Un tel procédé de décodage comprend donc une étape de décodage de la position des sommets, suivie d'une étape de décodage de la topologie.

Avantageusement, ladite étape de décodage de la position des sommets comprend une étape de décodage de la position des trois premiers sommets, suivie d'une étape de décodage des résidus quantifiés de prédiction des autres sommets.

De façon préférentielle, ladite étape de décodage de la topologie tient compte dudit code spécifique réservé aux sommets contextuellement complets pour reconstruire ladite topologie sans information relative à l'adjacence faces /sommets / arêtes.

Ladite étape de décodage des résidus des positions des sommets met avantageusement en oeuvre une étape de raffinement géométrique, consistant à raffiner progressivement la précision de la position desdits sommets.

Selon un aspect particulier de l'invention, ladite étape de décodage des résidus des positions des sommets ajoute systématiquement le bit 1 à chaque expansion binaire courante du train binaire venant d'être reçue, afin d'améliorer la qualité de reconstruction du maillage en cours.

### 5. Liste des figures

D'autres caractéristiques et avantages de l'invention apparaîtront plus clairement à lecture de la description suivante d'un mode de réalisation préférentielle de l'invention, donné à titre de simple exemple illustratif et non limitatif, et des dessins annexés parmi lesquels :
- la figure 1 illustre les conditions géométriques nécessaires à respecter pour la mise en oeuvre du procédé de l'invention ;
- la figure 2 est un exemple d'une liste d'arêtes, avec son sommet pivot ;
- la figure 3 illustre le fait qu'un sommet pivot connaît l'information d'orientation de ses arêtes adjacentes ;
- la figure 4 présente l'utilisation d'un sommet fantôme ;
- la figure 5 montre une face F adjacente au sommet S, choisie de façon arbitraire ;
- la figure 6 illustre la description des sommets et des faces ;
- la figure 7 est un exemple d'étiquetage des sommets, au départ ;
- la figure 8 présente un exemple d'ambiguïté, plusieurs sommets répondant au test d'adjacence ;
- la figure 9 montre le décalage des étiquettes de sommet, suivant l'orientation anti-horaire ;
- la figure 10 montre trois exemples de répartition des valences, illustrant l'intérêt d'un codage entropique ;
- la figure 11 présente une face germe, dont le premier sommet est affecté comme pivot ;
- la figure 12 illustre un exemple (en 6 étapes) d'une conquête d'arêtes, à partir de la face germe de la figure 11 ;
- la figure 13 présente les 6 étapes suivantes de la conquête débutée à la figure 12 ;
- la figure 14A présente la liste d'expansion obtenue lors des opérations des figures 12 et 13 ;
- la figure 14B illustre l'apparition d'une sous-liste horaire, la liste d'expansion ayant un sens de conquête anti-horaire ;
- la figure 15 montre, en 4 étapes, un refermement de liste, conduisant à l'apparition d'un sommet contextuellement complet ;
- la figure 16 présente une pile de listes d'arêtes utilisée par l'invention ;

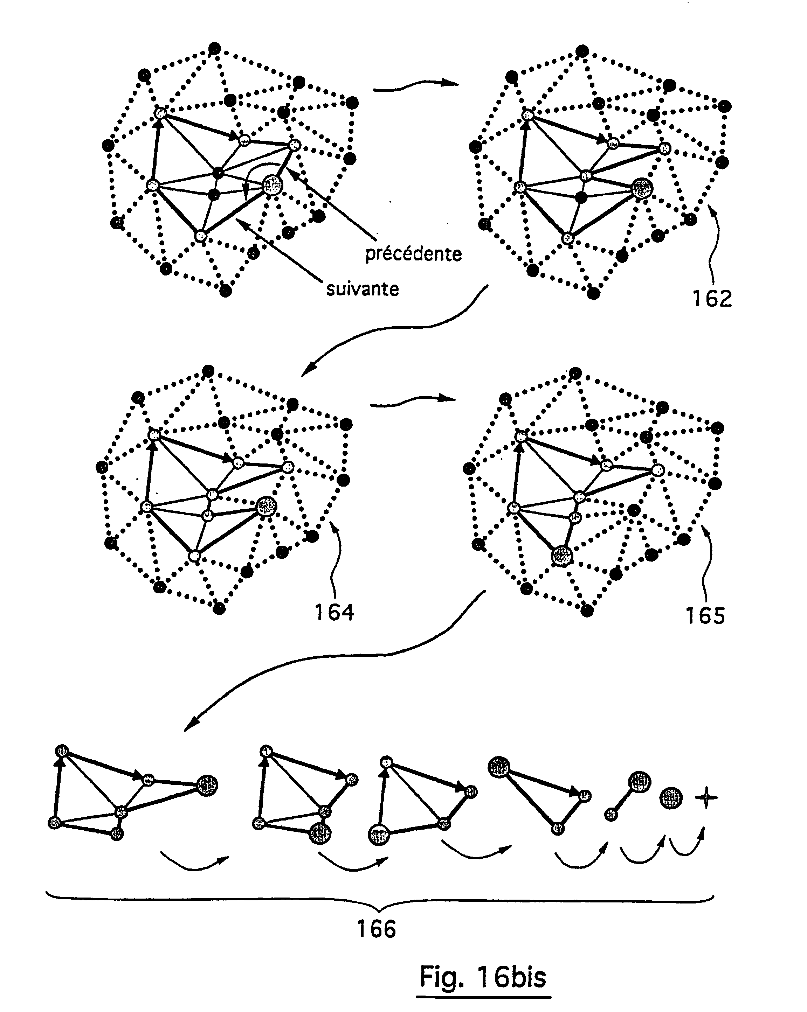

- la figure 16bis montre comment une liste orientée dans le sens horaire conquiert l'intérieur de la région qu'elle délimite ;

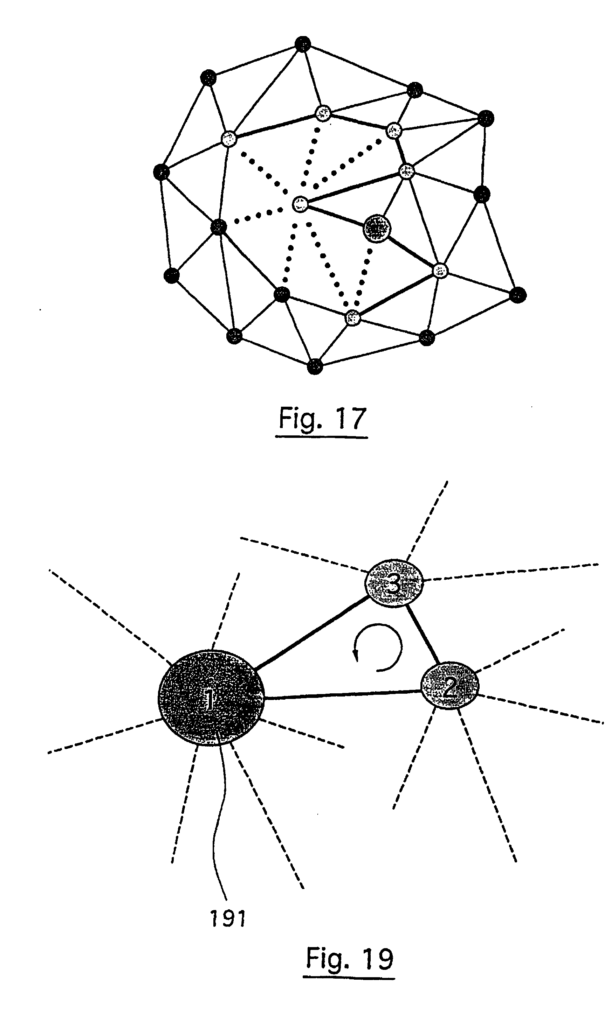

- la figure 17 illustre une liste formant une encoche ;

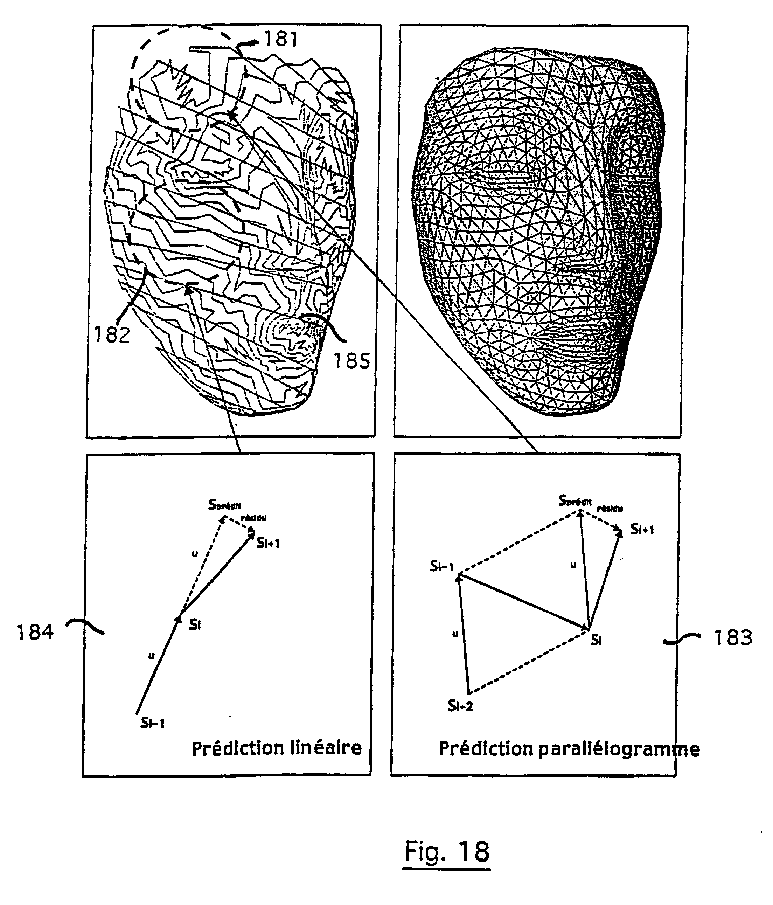

- la figure 18 présente deux types de prédiction (linéaire et parallélogramme) pouvant être mise en oeuvre, selon les types de région considérés ;

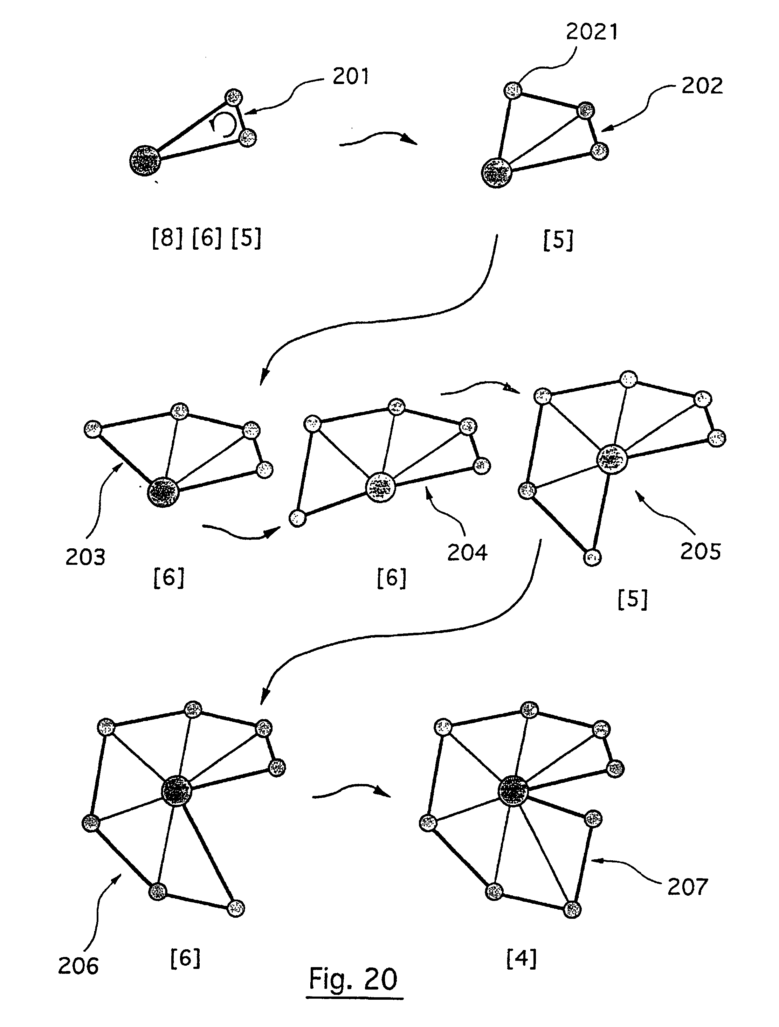

- la figure 19 illustre le début du décodage de la topologie selon l'invention ;
- la figure 20 montre la suite du décodage, permettant de reformer progressivement les faces originales du maillage ;

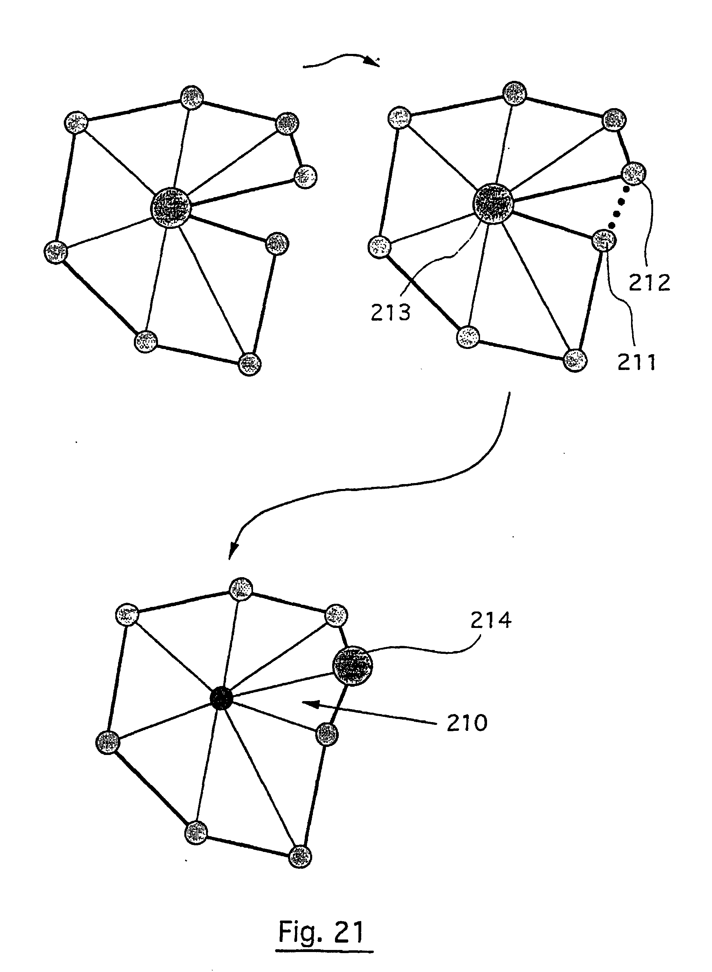

- la figure 21 illustre le traitement d'un pivot, lors du décodage ;

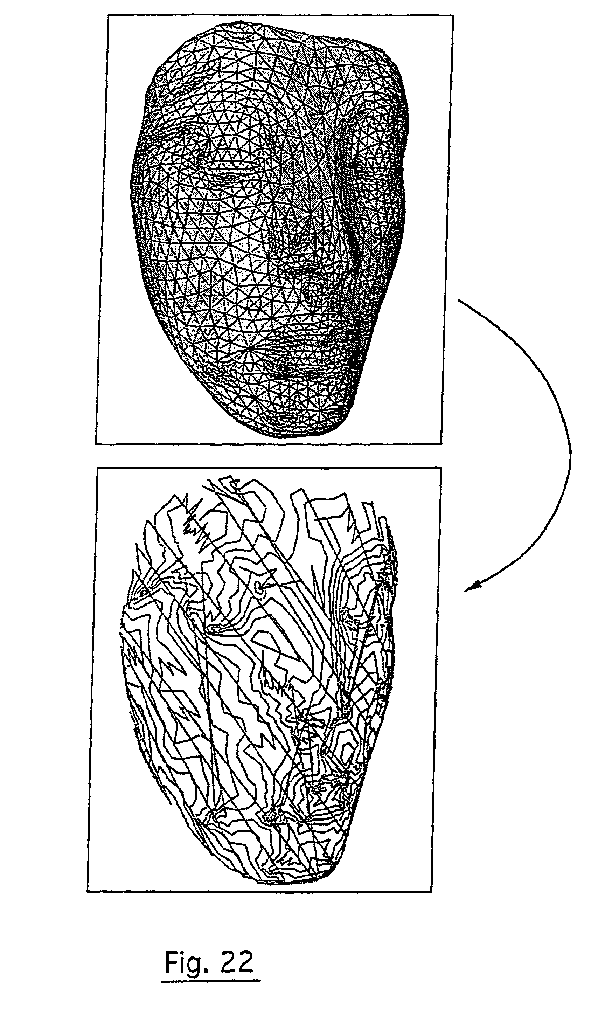

- la figure 22 montre, en partie haute, un exemple de maillage (Nefertiti irregular 1), et en partie basse l'ordre de conquête correspondant ;

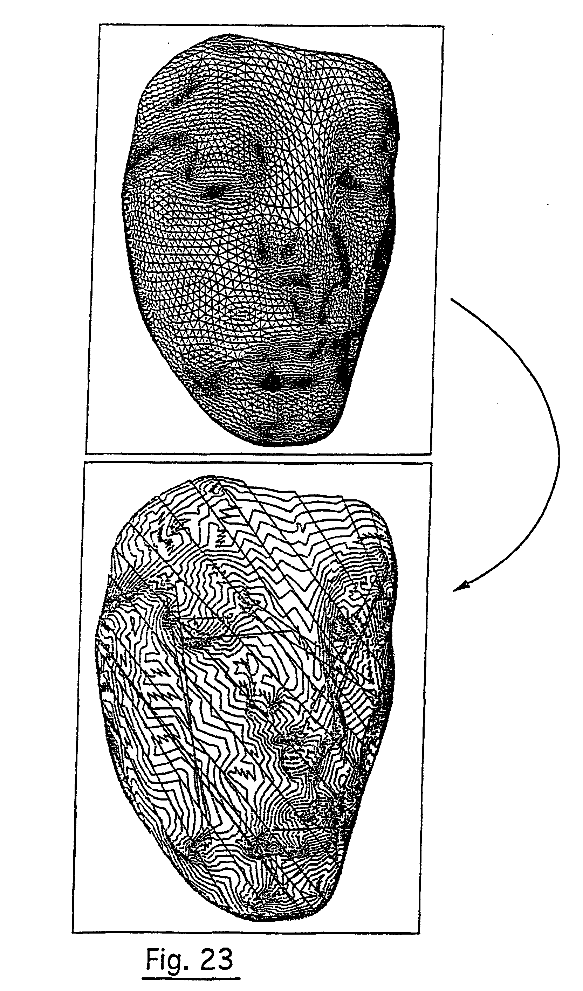

- la figure 23 montre, en partie haute, un autre exemple de maillage (Nefertiti irregular 2), et en partie basse l'ordre de conquête correspondant ;

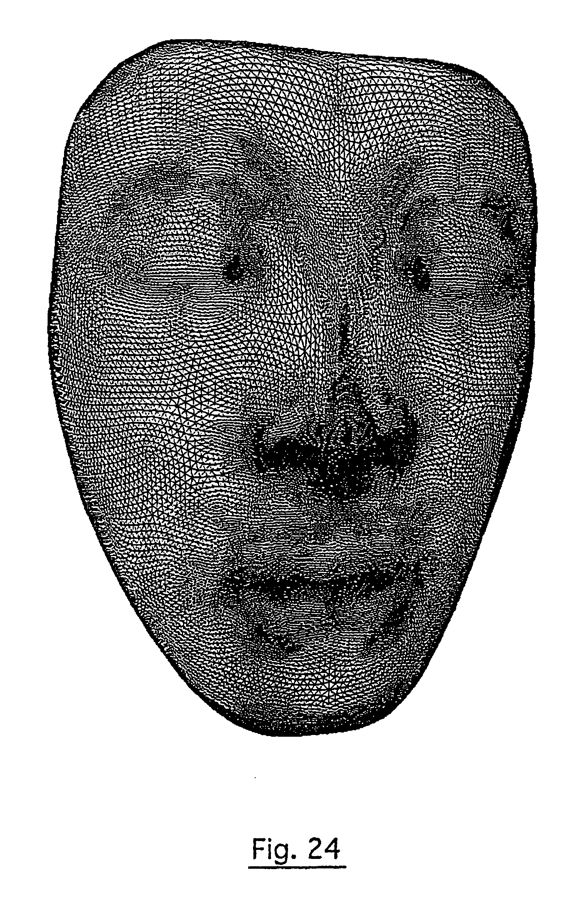

- la figure 24 montre un troisième exemple de maillage (Nefertiti irregular 3);

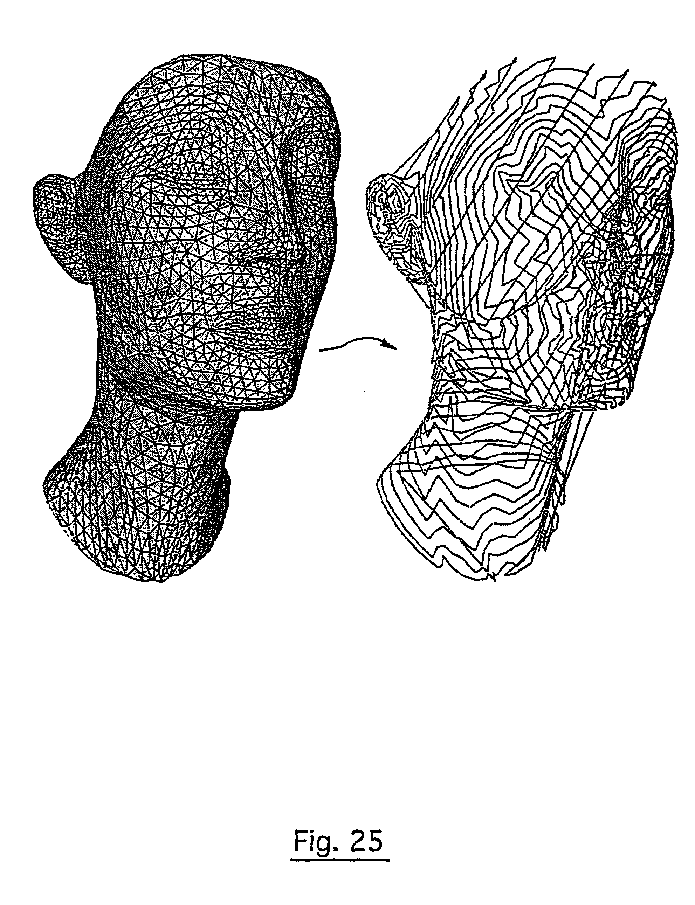

- la figure 25 montre, en partie haute à gauche, un quatrième exemple de maillage (Nefertiti regular 1), en partie haute à droite, l'ordre de conquête correspondant , et en partie basse un détail autour de la face germe ;

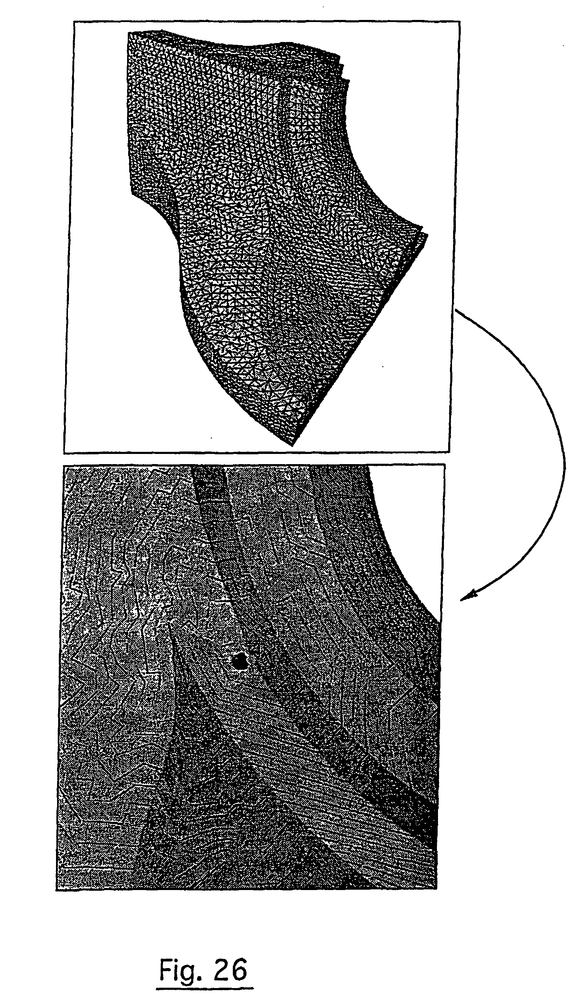

- la figure 26 montre, en partie haute, un cinquième exemple de maillage (Fandisk), et en partie basse le parcours autour de la face germe ;

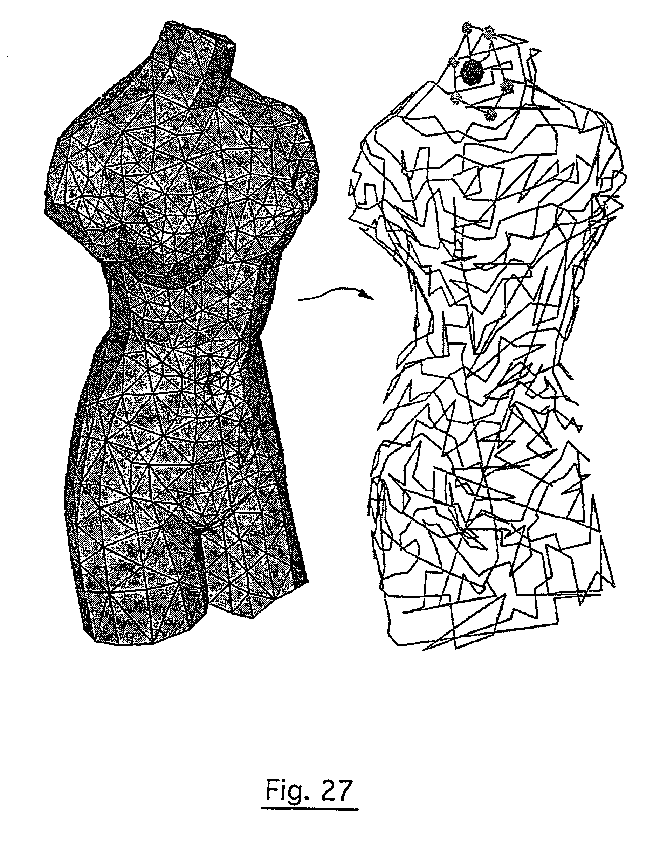

- la figure 27 montre, en partie gauche, un sixième exemple de maillage (Venus), et en partie droite l'ordre de conquête correspondant ;

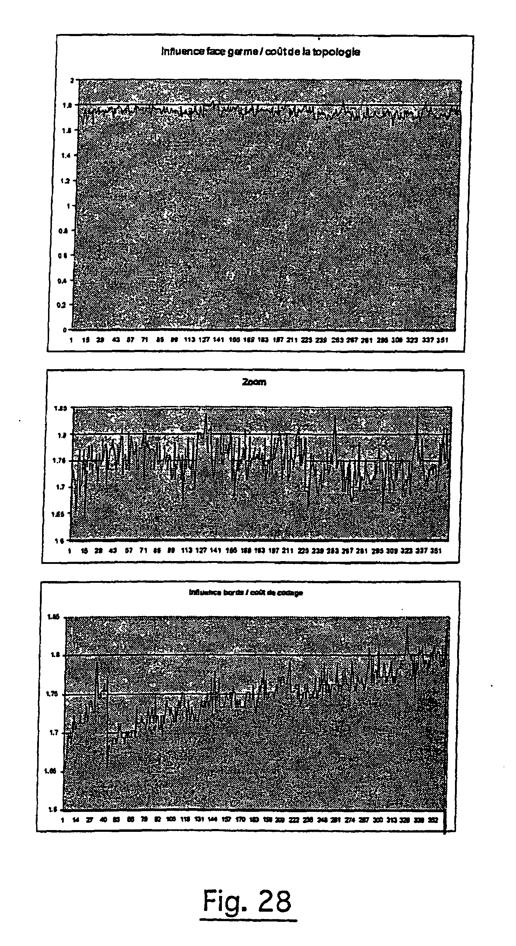

- la figure 28 présente trois graphiques illustrant l'influence du choix de la face germe (premier et deuxième graphiques) et du bord comme point de départ de la conquête (troisième graphique) ;

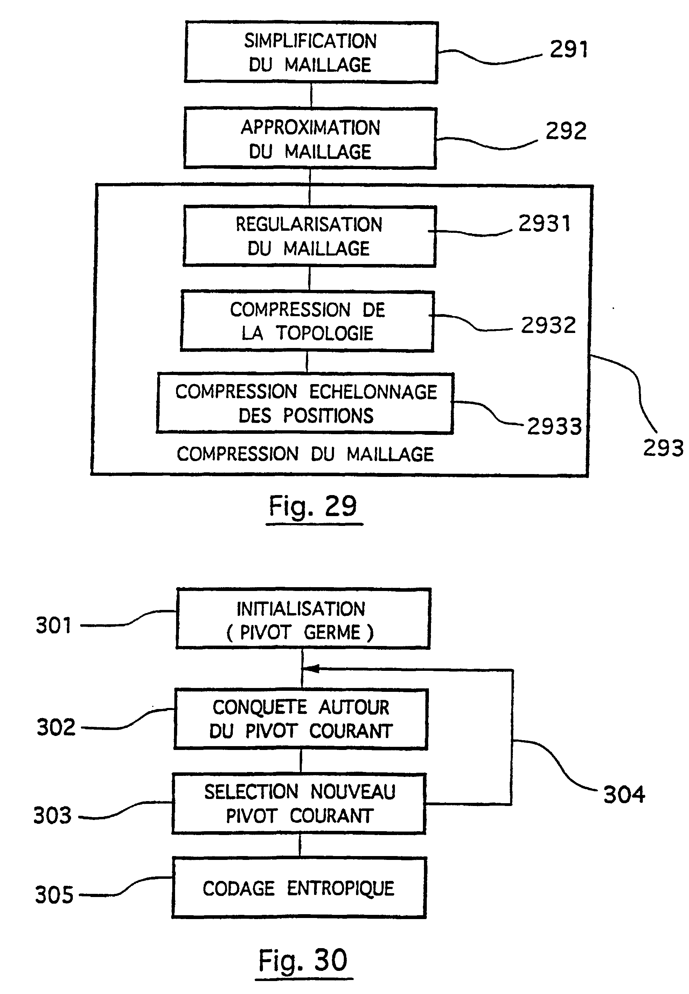

- la figure 29 est un organigramme général simplifié d'un procédé de codage de maillage selon l'invention ;
- la figure 30 est un organigramme simplifié détaillant l'étape de compression de la topologie de la figure 29.

### 6. Notions préliminaires

Avant de décrire un mode de réalisation de codage et de décodage sur l'invention, on définit ci-dessous quelques notions auxquelles il est fait appel par la suite.

Avant de décrire les méthodes de codage et de décodage, il convient de définir les notions couramment utilisées par la suite.

### 6.1 Graphe

Un graphe est un maillage constitué d'un arrangement de sommets et de faces triangulaires. Plusieurs niveaux d'adjacence peuvent être définis sur les faces, les sommets et les arêtes.

Au minimum :
- un sommet est défini par sa position dans l'espace,
- une face triangulaire est définie par trois références aux sommets qu'elle relie,
- une arête est définie par deux références aux sommets qu'elle relie.

L'adjacence maximale utilisée pour le codage :
- pour un sommet : la liste de ses sommets, de ses faces et de ses arêtes adjacentes,
- pour une face : la liste de ses faces adjacentes, cette liste contenant au plus trois références.

### 6.2 Degré d'un sommet

Le degré, ou la valence d'un sommet correspond au nombre de ses sommets voisins. Le degré minimum que l'on peut rencontrer dans un maillage sans bords ni trous est de 3. En effet, le sommet fantôme supprime virtuellement les bords et les trous des maillages.

### 6.3 Liste d'arêtes

Une liste d'arêtes est définie sur un maillage par une liste de sommets successivement adjacents, les listes utilisées dans la méthode proposée forment une boucle.

On les appelle aussi listes de conquête au cours du codage, et listes de reconstruction au cours du décodage. Une telle liste stocke une information de position afin de pouvoir retrouver différentes occurrences d'un même sommet, et la position d'un sommet particulier appelé pivot.

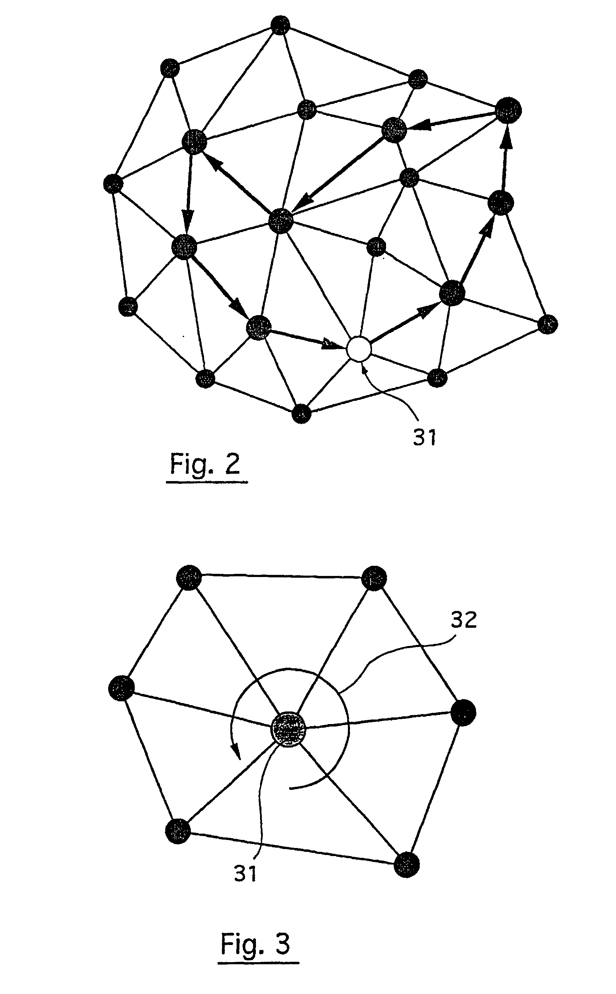

La figure 2 illustre une telle liste (flèches en gras). On vérifie que le premier et le dernier sommets sont également adjacents.

### 6.4 Sommet pivot, et conquête par arête

Pour chaque liste d'arêtes, un sommet particulier est défini : le pivot. La figure 3 présente un exemple, dans lequel le sommet pivot 31 connaît une information d'orientation. On indique par la suite ensuite suivant quels critères il est choisi. Une orientation 32 anti-horaire sur les arêtes adjacentes à ce dernier est définie, permettant ainsi une conquête progressive sur les arêtes autour du pivot. Chaque arête possède un drapeau binaire reflétant son état de conquête.

### 6.5 Sommet fantôme

Pour garantir une des conditions nécessaires énumérée précédemment : la liste des sommets reliant les sommets voisins d'un sommet donné est fermée, on ajoute un sommet fantôme unique pour le maillage à coder dès que ce dernier comporte des bords. Les arêtes le reliant aux bords sont également créées, et l'adjacence par sommet et par arête est construite.

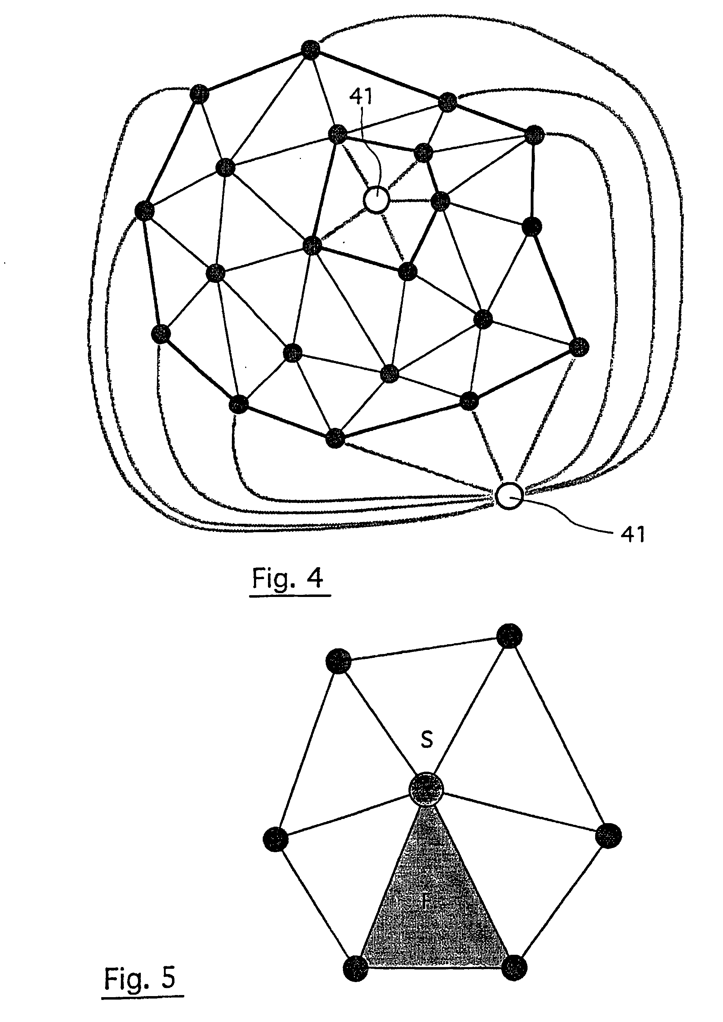

Un exemple de sommet fantôme 41 est illustré en figure 4. On constate que ce sommet fantôme 41 possède le don d'ubiquité. Les arêtes (en pointillés) et l'adjacence sont également créées, pour garantir la fermeture de la liste d'adjacence de ses sommets voisins. Le degré d'un fantôme correspond au nombre de sommets participant à la formation d'un bord et/ou d'un trou dans le maillage.

### 6.6 Orientation topologique

Après le calcul de l'adjacence des arêtes, chaque sommet possède la liste de ses arêtes voisines. L'algorithme fonctionnant par conquête dans le sens anti-horaire des arêtes autour d'un sommet pivot, il convient de trier à l'avance la liste d'arêtes de chaque sommet suivant le même ordre. L'orientation topologique n'utilise aucune notion d'angle pour cela, et utilise avantageusement l'information d'adjacence entre les sommets, ainsi que l'ordre des sommets décrivant une face.

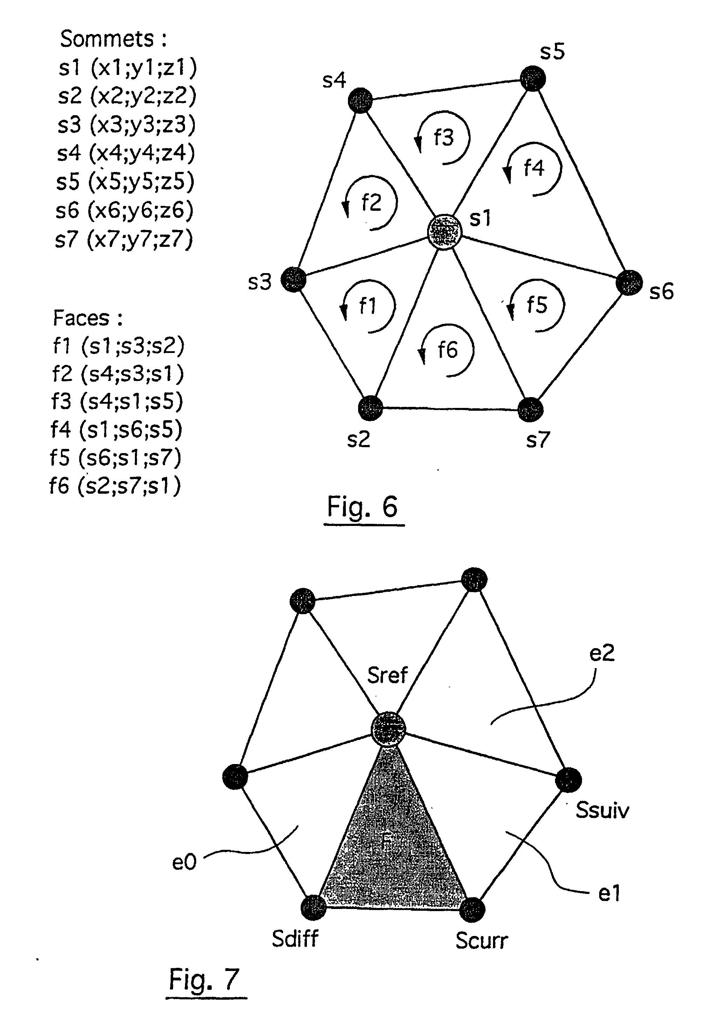

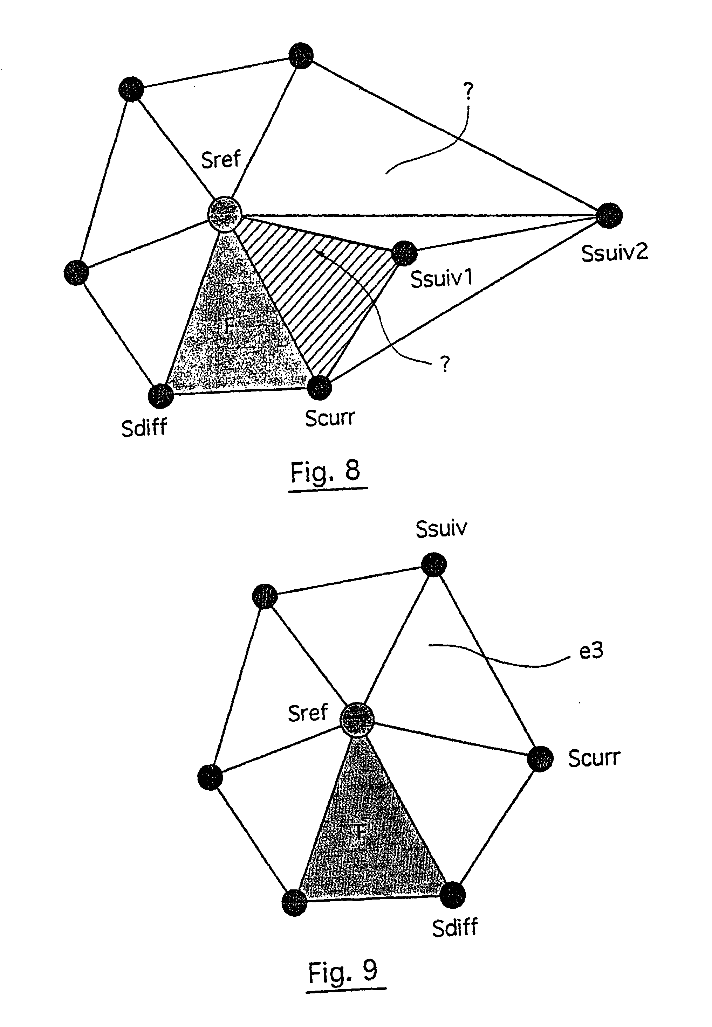

Pour chaque sommet S, excepté le fantôme, l'algorithme de tri fonctionne comme suit :
1. une face adjacente F est choisie de façon arbitraire, ainsi que cela est illustré en figure 5. On a vu dans les conditions nécessaires qu'un sommet non fantôme participe toujours à la création d'au moins une face, ainsi une orientation peut être également définie sur les arêtes d'un sommet appartenant au bord ;
2. les sommets formant une face sont toujours décrits suivant une orientation anti-horaire afin de garantir la cohérence des normales sur la surface décrite par le maillage. Cet aspect est illustré par la figure 6. Les faces sont définies par trois références aux sommets. L'ordre de description est anti-horaire et cohérent autour du sommet s1. Cet ordre va permettre le tri des arêtes adjacentes au sommet s1 suivant une orientation anti-horaire. On utilise cette information afin de trier les arêtes. Les premières arêtes e0 et e1 sont déterminées par l'orientation de la face F.
3. les sommets sont étiquetés comme décrit dans la figure 7, puis un test d'adjacence entre sommets et un test de comparaison permettent de trouver la prochaine arête e2 dans le sens anti-horaire.
   Ainsi, au départ, les sommets sont étiquetés comme suit : Sref est le sommet concerné par le tri de sa liste d'arêtes ajdacentes, Sdiff et Scurr sont déduits de l'orientation définie sur la face F. L'arête e2 est déduit du sommet Ssuiv, trouvé par relation d'adjacence entre sommets (Ssuiv est adjacent à Sref et Scurr et différent de Sdiff).
4. il peut y avoir ambiguïté pour trouver la prochaine arête lorsqu'un sommet voisin possède un degré 3. Celle-ci est alors levée en incorporant des informations provenant des faces lorsque le sommet n'est pas situé sur un bord du maillage. Sur un bord du maillage un vecteur de sommets déjà triés est créé, car aucune face ne relie ce sommet au sommet fantôme.
   Si, dans l'exemple de la figure 8, on constate qu'il y a une ambiguïté, car plusieurs sommets Ssuiv répondent aux tests d'adjacences. Cette ambiguïté est levée par un test sur les faces : on retient Ssuiv qui forme une face avec Sref et Scurr.
5. les sommets sont ensuite étiquetés suivant un décalage dans le sens anti-horaire (comme illustré en figure 9, à l'itération suivante, les étiquettes de sommets se décalent suivant l'orientation anti-horaires calculée en cours de marche) l'algorithme reprend à partir de l'étape 3 jusqu'à trier la totalité des arêtes adjacentes.

### 7. Structure générale du procédé de codage de l'invention

La technique de codage de l'invention peut bien sûr être utilisée seule. Elle peut également, avantageusement, être utilisée complémentairement avec des techniques de simplification et d'approximation, telles que celles décrites dans les documents de brevets déjà mentionnés. Dans ce cas, ainsi que cela est illustré en figure 29, le traitement du maillage comprend tout d'abord une étape de simplification 291, puis une étape d'approximation du maillage 292.

L'invention concerne essentiellement l'étape suivante de compression du maillage 293, qui comprend notamment une étape de compression de la topologie 2932 et une étape de compression et de représentation échelonnable des positions des sommets 2933.

Une étape préalable de régularisation du maillage 2931 peut être prévue si nécessaire. L'étape 293 de compression du maillage agit indépendamment sur chaque objet (ou maillage) décrivant une scène 3D.

Le principe général de l'étape 2932 de compression de la topologie est illustré par la figure 30. Elle débute par une étape 301 d'initialisation, consistant à déterminer une face et un pivot germes, pour initialiser le processus de codage.

Ensuite, on met en oeuvre une étape 302 de conquête des arêtes adjacentes au pivot courant (le pivot germe au départ), suivant une orientation prédéterminée, par exemple l'orientation anti-horaire.

Lorsque la conquête autour du pivot courant est terminée, on sélectionne un nouveau pivot courant 303, en privilégiant les sommets complets, puis on réitère (304) l'étape 302 de conquête. Ces étapes 302 et 303 sont décrites plus en détail par la suite.

Avantageusement, on met ensuite en oeuvre un codage entropique 304, également décrit par la suite.

### 8. Description d'un mode de réalisation particulier

### 8.1 Régularisation du maillage

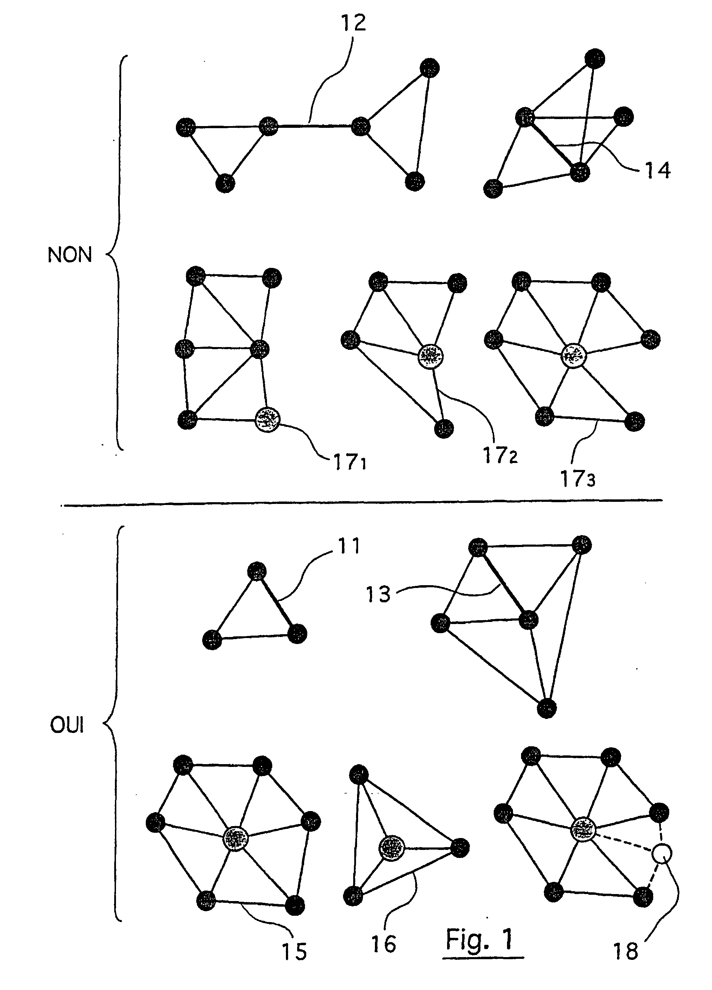

La méthode de codage de l'invention nécessite que les conditions géométriques suivantes, illustrées en figure 1 soient respectées sur les maillages à compresser :
- un sommet contribue toujours à la construction d'une arête : il n'y a pas de sommet isolé ;
- une arête contribue toujours à la construction d'une face (11): il n'y a pas d'arête isolée (12);
- une arête possède soit une (11), soit deux (13) faces voisines, et jamais plus de deux (14);
- la liste des sommets reliant les sommets voisins d'un sommet donné est fermée (15 et 16), et a contrario (17₁, 17₂ et 17₃). Pour cela, on verra que l'on ajoute sur les bords ou sur les trous un sommet particulier, appelé sommet fantôme (18).

Si nécessaire, l'état de régularisation du maillage 2931 peut être mis en oeuvre, pour lever les dégénérescences telles que :
- les sommets et arêtes isolés : ils sont codés à part, et reconstruits lors du décodage ;
- les adjacences arêtes/faces supérieures à deux : levées par un dédoublement de l'arête, codées comme accident et recréées sur le décodeur.

Il s'agit donc de compresser un maillage triangulaire régulier, formé d'une liste de sommets et d'une liste de faces triangulaires :

| Maillage triangulaire | | | |
|---|---|---|---|
| sommets | | faces | |
| s1 | x1 y1 z1 | f1 | s1 s2 s3 |
| s2 | x2 y2 z2 | f2 | s3 s5 s4 |
| s3 | x3 y3 z3 | f3 | s2 s3 s6 |
| s4 | x4 y4 z4 | f4 | s2 s1 s4 |
| s5 | x5 y5 z5 | f5 | s7 s5 s3 |
| s... | ... | f... | ... |

Le codeur de maillages génère successivement deux trains binaires distincts : l'un décrivant la topologie (la manière dont sont maillés les points pour constituer des faces), et l'autre décrivant les positions. L'algorithme de codage de la topologie réordonne les sommets du maillage de manière à obtenir une taille minimale pour la topologie. Cet ordre sera ensuite fourni au codeur de positions.

### 8.2 Codage de la topologie

La topologie décrit un maillage, ou plus précisément la manière dont sont maillés les sommets pour former des faces triangulaires. Dans un format non compressé, tel que le format VRML, la topologie est décrite par une liste de faces triangulaires, où chaque face est définie par trois références à des sommets (voir tableau précédent).

Le coût de la topologie s'exprime ainsi en bits par face et est évalué à 3 x 32 = 96 bits/face sans compression. Un tel format présente des redondances, puisque les faces adjacentes à un sommet S de degré n font n fois référence à ce sommet. Le degré moyen d'un sommet étant de 6, la redondance peut être évaluée dans un premier temps à 6. En pratique une nouvelle forme de description des faces permet de constater une redondance bien plus élevée.

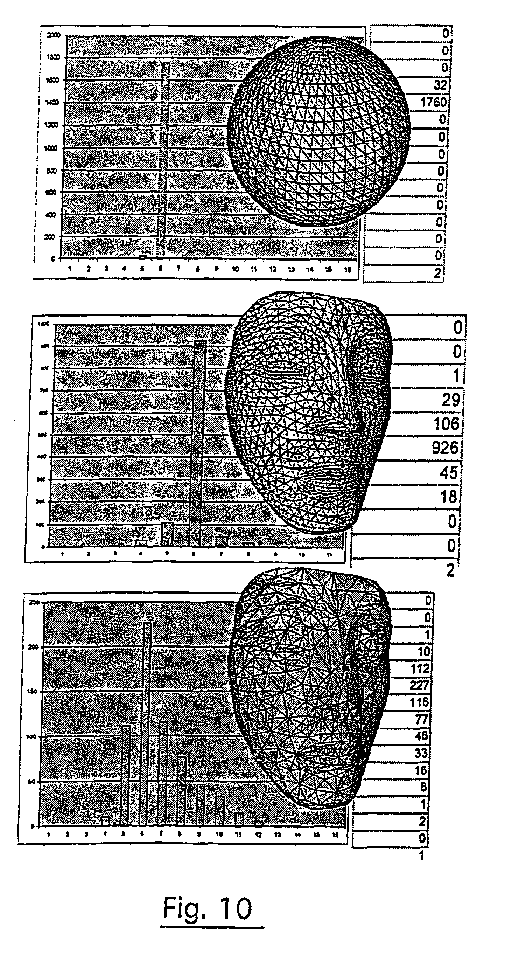

Lorsque l'on trace l'histogramme des valences des sommets, on constate qu'il présente en général un pic sur une valeur moyenne et une dispersion autour de cette dernière, qui est fonction de la régularité du maillage en termes de valence, comme l'illustrent les trois exemples de la figure 10.

On vérifie ainsi que, plus un maillage est régulier, plus son histogramme présente un pic centré sur la valeur 6. Une telle répartition incite au codage entropique de cette information, à condition de fournir suffisamment d'information supplémentaire au décodeur pour permettre la reconstruction de la topologie.

### 8.2.1 Conquête

Le présent algorithme de codage de topologie exploite avantageusement l'information de valence, il fonctionne par conquête d'arêtes et utilise pour cela une pile de listes d'arêtes.

### 8.2.1.1 Initialisation

1. L'adjacence faces/sommets est construite sur le maillage.
2. Un sommet fantôme est ajouté au maillage si ce dernier comporte des trous ou des bords. Ce sommet est étiqueté comme tel. Aucune face reliant les sommets du bord au fantôme n'est créée.
3. Le maillage original est seulement décrit par une liste de sommets et de faces. L'algorithme fonctionnant par conquête d'arêtes, il requiert une structure de données basée arêtes. Ensuite une adjacence complète faces /sommets / arêtes correspondante est construite. Le coût mémoire d'une telle adjacence faces / sommets / arêtes peut être évalué comme suit.
Soit N le nombre de sommets du maillage, F le nombre de faces, on trouve en moyenne : N = F / 2. Le coût mémoire du maillage original peut ainsi être évalué si l'on considère qu'une position ou une référence est codée sur 32 bits : coût = (3 x 32) + (3 x 32) / 2 = 144 bits/face.
On considère le degré moyen d'un sommet égal à 6 et la valence minimale d'un sommet est de 3. Le nombre moyen d'arêtes ou de faces voisines d'un sommet est égal au degré, donc 6 en moyenne. Le nombre moyen d'arêtes E est évalué à : E = N + F,
Le tableau ci-dessous montre que le codeur nécessite temporairement environ 43 fois plus de mémoire que le maillage original.

| Maillage original | | Maillage et adjacence pour le codage | | |
|---|---|---|---|---|
| N sommets | F faces F ≈ 2 x N | N sommets | F faces F ≈ 2 x N | E arêtes E ≈ N + F ≈ 3 x N |
| position : x y z 3x32 bits | références : si sj sk 3x32 bits | position : x y z 3 x 32 bits sommets voisins 6 x 32 bits faces voisines 6 x 32 bits arêtes voisines 6 x 32 bits | références : si sj sk 3 x 32 bits faces voisines 3 x 32 bits | références : si sj 2 x 32 bits |
| coût moyen : 144 bits/facc | | coût moyen : 624 bits/face (4.3 x coût original) | | |

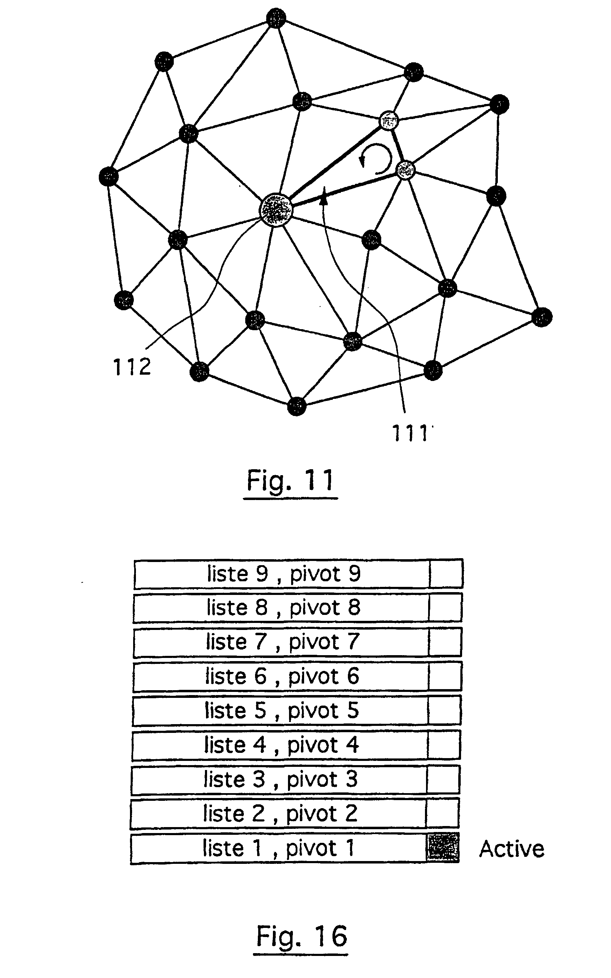

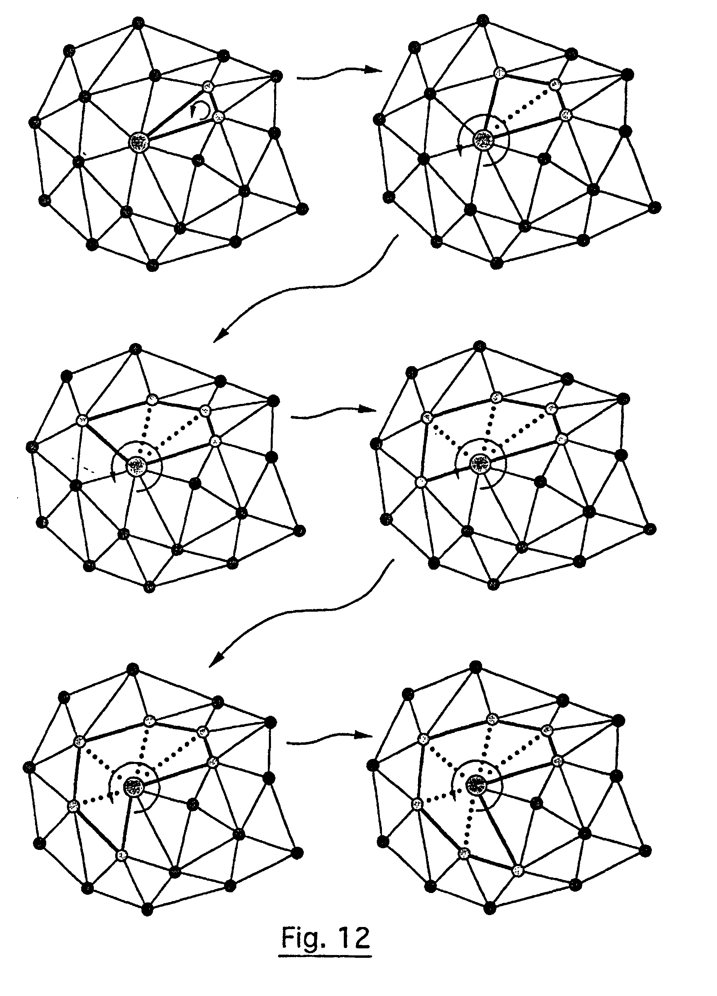

4. Les listes de références aux arêtes autour de chaque sommet, excepté le sommet fantôme, sont triées au sens d'une orientation topologique anti-horaire. Ce calcul est réalisé une fois pour toutes.
5. Une liste d'arêtes vide est générée et introduite dans la pile. Cette liste est appelée liste active. Une face appelée germe est sélectionnée de façon arbitraire sur le maillage, et ses trois sommets sont ajoutés à la liste active dans leur ordre de description dans la face germe.
Simultanément à l'ajout des sommets dans la liste trois codes correspondant à la valence de ces derniers sont générés. Le premier sommet est affecté comme pivot de la liste active. La liste active est ainsi orientée dans le sens anti-horaire, et prête pour la conquête sur le maillage. La figure 11 montre un exemple de face germe, orientée anti-horaire, sélectionnée dans un maillage.
Le codage de cette face germe comprend les codes : [8], [6], [5]. Ces codes correspondent au degré des sommets. Le premier sommet 112 de la face germe 111 est affecté comme sommet pivot. La liste courante est donc formée des trois sommets de la face germe 111.
A chaque itération la prochaine arête libre autour du pivot est marquée comme conquise, et le sommet correspondant est ajouté à la liste avant la position du pivot, ainsi que cela est illustré en figure 12. Un code correspondant à la valence du sommet inséré est généré. La liste active s'agrandit ainsi tout en conservant une orientation anti-horaire, c'est une liste de conquête par expansion. A chaque arête conquise, le code correspondant à la valence du sommet inséré est généré. La liste active comprend donc les éléments suivants :
[8], [6], [5], [5], [6], [6], [5], [6].
Il est à noter que la liste des degrés ne contient pas d'élément inférieur à 3, c'est le degré minimal d'un maillage sans bords ni trous après fermeture grâce au sommet fantôme. Au moment du codage des valences, ces valeurs sont incrémentées d'une unité, pour réserver 4 valeurs spécifiques (décrites par la suite).

### 8.2.1.2 Première conquête

La liste active commence alors une conquête autour de son sommet pivot, en marchant sur les arêtes dans l'ordre anti-horaire.

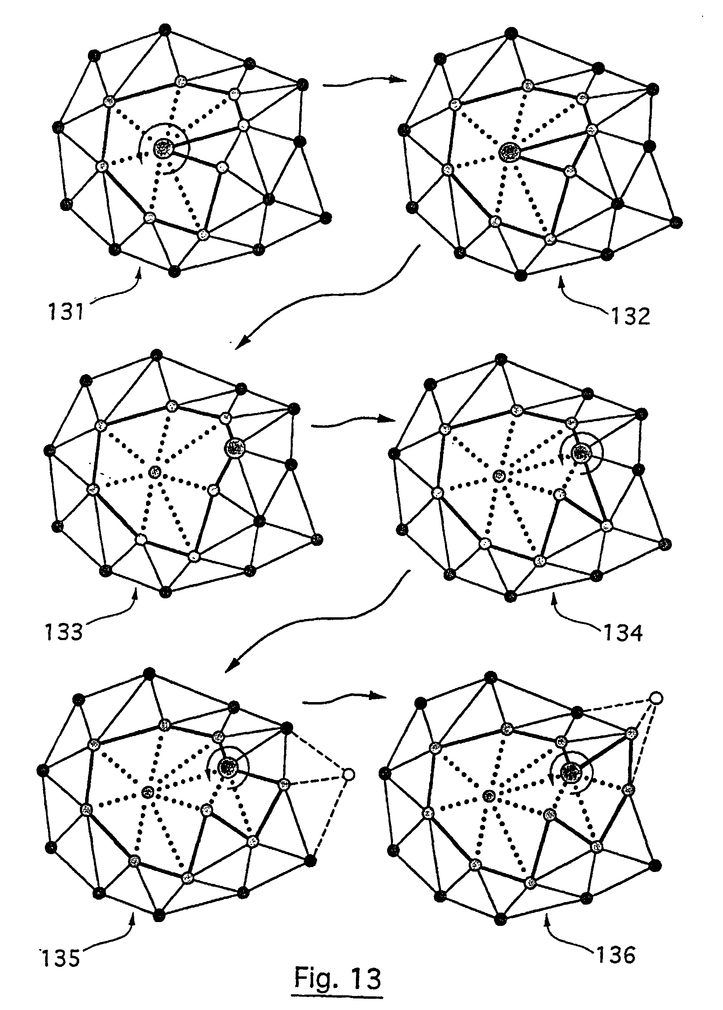

Cette opération est illustrée par la figure 13, qui présente la suite des opérations effectuées à la figure 12. Au niveau 131, on ajoute le code [4], puis on constate que le pivot est complet. On marque alors l'arête (opération 132), on avance vers le pivot suivant, et on supprime le pivot précédent (opération 133).

Lorsque le sommet pivot est complet (figure 13), c'est à dire que toutes ses arêtes adjacentes sont conquises, l'arête reliant les sommets précédant et suivant le pivot est marquée, et le sommet pivot est supprimé de la liste. Aucun code n'est généré pour cette opération, qui ferme le polygone décrit par les sommets voisins du premier sommet pivot.

Le sommet suivant le pivot précédemment supprimé est affecté comme nouveau pivot de la liste active afin de poursuivre la conquête. Si un sommet de la liste est déjà complet il sera encouragé comme candidat au pivot. Pour cela la recherche s'effectue simultanément dans les sens anti-horaire et horaire afin d'accélérer la recherche, avec une priorité pour le premier sommet rencontré dans le sens anti-horaire. Cet ordre aura une importance lors du décodage, pour garantir une bonne synchronisation du décodeur avec le codeur.

### 8.2.1.3 Conquêtes suivantes

La liste poursuit sa conquête par expansion autour de son nouveau sommet pivot. Les codes correspondant aux valences des sommets insérés dans la liste sont générés. Il est à noter qu'un sommet du bord voit sa valence originale augmentée de 1, car une arête le reliant avec le fantôme a été générée dans la structure de données ainsi que cela est illustré en figure 13 (opérations 135 et 136).

Ainsi, l'évolution de la liste active est la suivante :
[4],[],[], [6],[5],[5].
[ ] illustre le fait que deux opérations ont été réalisées sans générer de codes.

Un tel sommet permet le traitement des bords et des trous avec un coût moindre. Chaque sommet n'est inséré qu'une fois dans la liste, excepté le sommet fantôme, qui ne peut être candidat au pivot (on rappelle qu'aucune orientation topologique n'a pu être définie autour de ce dernier par l'absence de face adjacente).

Il est par contre supprimé de la liste s'il est complet (au sens strict) ou si deux fantômes successifs sont détectés dans la liste. Ce cas se produit lorsque les sommets compris entre deux occurrences du fantôme sont successivement supprimés par conquête de leurs arêtes adjacentes. Ainsi la suppression du dernier pivot complet adjacent à deux occurrences du fantôme provoque l'apparition de deux occurrences successives du fantôme dans la liste active.

Le fantôme permet de garantir la fermeture de la boucle d'adjacence formée par la liste active, c'est le relais d'un bord à l'autre du maillage. Un code spécifique (par exemple 0) lui est réservé dans la liste des valences (ou degrés) impossibles. La présence de plusieurs occurrences d'un sommet fantôme dans la liste impose un stockage d'une information de position en plus des éléments de la liste, afin de pouvoir différencier ces différentes occurrences.

Au cours de la conquête la liste active voit sa taille varier, aussi bien en accroissement qu'en diminution. L'insertion d'un nouveau sommet à l'extrémité d'une arête conquise permet son expansion, tandis que la suppression d'un sommet pivot complet permet sa diminution.

La taille d'une liste de conquête ainsi générée est bien inférieure au nombre de sommets complets du maillage à coder, ce qui assure un coût de codage réduit et une vitesse de conquête élevée.

### 8.2.1.4 Séparation en deux listes

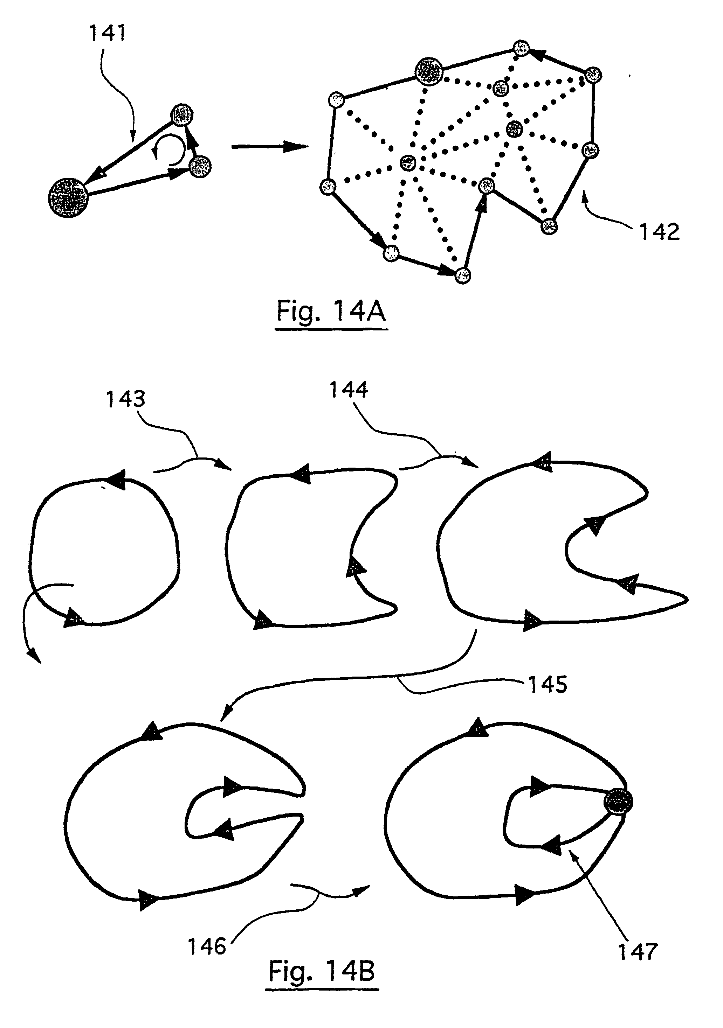

La liste de conquête originale est orientée dans le sens anti-horaire. Son expansion peut se faire soit de manière régulière, soit avec un fermeture géométrique. Ainsi que cela est illustré en figure 14A, lorsque le germe 141 est anti-horaire (sens de la conquête des arêtes anti-horaires), une liste 142 orientée anti-horaire réalise une expansion sur le maillage au cours de la conquête. Cet aspect est également illustré par les étapes 143 à 145 de la figure 14B.

Dans le second cas (étape 146), d'un point de vue géométrique la liste enferme une région de triangles. Plus le maillage est irrégulier, topologiquement parlant, et plus la méthode rencontre des fermetures de listes (création d'une sous-liste horaire 147 : en cas de refermement la sous-liste change de sens).

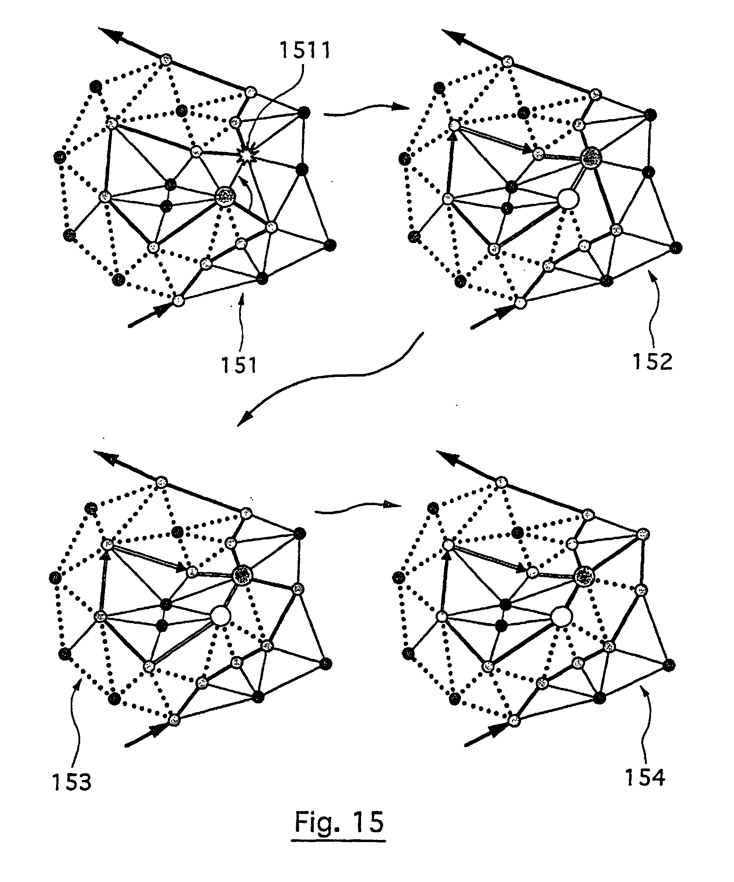

D'un point de vue du codage la méthode présentée essaie de ne générer qu'une référence à chaque sommet, ce qui serait optimal. Or une fermeture de liste intervient lorsque le sommet S à l'extrémité de la prochaine arête à conquérir a déjà été codé, il est donc déjà présent dans la liste active (figure 15). En théorie un codage sans compression devrait transmettre alors l'index du sommet S pour que le décodeur sache comment mailler le pivot avec ce dernier.

La technique de l'invention génère plutôt un code réservé (par exemple degré 1), et code ensuite dans un autre vecteur un offset signé (exprimé en nombre de sommets) à partir de la numérotation des sommets dans la liste.

Les bits de signe et les valeurs absolues des offsets sont codés à part. Le fait d'utiliser un bit de signe permet de diminuer l'excursion du vecteur de valeurs d'offset, le vecteur de signes ainsi généré n'étant pas compressible car équiprobable. La liste est alors séparée en deux listes à la position du nouveau sommet référencé, et deux arêtes sont marquées : celle reliant le pivot au sommet S et celle reliant le sommet précédent du pivot dans la liste au sommet S.

Un exemple de séparation est illustré en figure 15. On suppose une conquête 151 réalisée. La prochaine arête à conquérir pointe sur un sommet déjà codé 1511. On marque alors les deux arêtes (opération 152) et on sépare en deux listes (code [1]). Chaque liste possède son propre pivot. La liste en trait double est élevée dans la pile (figure 16).

On génère ensuite le code [5] (opération 153), le sommet considéré étant de degré 5, fantôme compris. Lors de l'étape 154, on génère à nouveau le code [5], le sommet étant également de degré 5, fantôme compris. Le pivot est désormais contextuellement complet. On génère alors un code [2], car chaque liste ne conquiert que son « territoire » réservé. Ainsi, un refermement de liste génère trois valeurs : un code [1], un bit de signe et un code de valeur absolue de l'offset exprimé en nombre de sommets dans la liste. Un code [2] peut ensuite intervenir lorsque le nouveau sommet pivot de la liste active est contextuellement complet.

La nouvelle liste générée est élevée dans la pile pour être traitée ultérieurement (figure 16 : l'algorithme gère une pile de liste d'arête. Une seule liste (liste 1) est active à la fois. Chaque liste possède son propre sommet pivot). Elle hérite du sommet pivot de la liste active, sauf si un sommet complet est détecté. Ce dernier sera alors affecté comme pivot.

Une liste orientée dans le sens anti-horaire génère une nouvelle liste d'orientation inverse après une fermeture, et inversement (figure 14). Ainsi une liste de conquête par expansion devient une liste de conquête par rétractation après séparation, assurant à l'algorithme une cohérence complète afin de conquérir l'intégralité de la surface.

Chaque liste devra donc conquérir uniquement son domaine réservé, c'est-à-dire soit l'extérieur de sa région si c'est une liste anti-horaire, soit l'intérieur dans le cas inverse (figure 16 bis).

Le pivot de la liste active, maintenant réduite, est supprimé, et le sommet S devient le nouveau pivot actif de la liste active. Comme pour la nouvelle liste élevée dans la pile, un éventuel sommet complet est encouragé pour être pivot.

### 8.2.1.5 Fusion de listes

La conquête d'une arête adjacente à un sommet appartenant à une liste différente de la liste active engendre une fusion de listes. Un code lui est réservé (par exemple 3), suivi d'un index de la liste inactive dans la pile et d'un index du sommet traité dans cette liste.

Les index correspondants sont stockés sans compression, une telle fusion étant en pratique très rare. Elle n'intervient en effet que sur des surfaces de maillage de type supérieur à 0.

On constate que 4 codes réservés sont nécessaires. Pour cette raison, la valence minimale étant 3, les valences sont incrémentées de 1 systématiquement.

### 8.2.1.6 Poursuite de l'algorithme

A chaque itération de l'algorithme, au moins une arête est conquise, assurant la progression de la conquête d'une liste. Comme un sommet pivot complet est systématiquement supprimé, cela assure la décroissance d'une liste active jusqu'à atteindre une taille nulle. Une liste active vide est supprimée de la pile et la liste suivante de la pile prend sa place. L'algorithme finit sa conquête lorsque la pile de listes est vide.

La figure 16bis illustre une sous-liste orientée dans le sens horaire, qui conquiert l'intérieur de la région qu'elle délimite, car la conquête est toujours réalisée dans le sens anti-horaire autour des pivots. Lors de l'opération 162, on génère donc un code [6], puis lors de l'opération 163, un code [4]. Le pivot est alors complet. On marque l'arête reliant le sommet suivant et le sommet précédent. Lors de l'opération 165, on constate à nouveau que le pivot est complet. On effectue le marquage de l'arête reliant le sommet suivant et le précédent.

La séquence des opérations suivantes 166 montre l'intérêt du choix des sommets complets comme candidats au pivot. On crée en effet ainsi une face avec un coût nul. Lors du décodage, une telle région sera entièrement maillée avec un coût nul. Une liste de conquête vide est alors supprimée de la pile.

### 8.2.1.7 Codage entropique

Les deux vecteurs de code de degrés et de valeurs absolues d'offset sont transmis à un codeur entropique utilisant un modèle de probabilité adaptatif. Un tel codeur a été choisi car il permet de générer des longueurs de code fractionnaires et d'assurer un codage sans perte, nécessaire en ce qui concerne la topologie.

La courbe de distribution des valences des sommets permet d'obtenir de bonnes performances lorsque le maillage est régulier et lorsque le nombre de sommets est élevé (figure 10). La longueur du vecteur d'offsets correspond au nombre de séparations de listes rencontrées au cours de la conquête, il est en général bien inférieur au nombre de codes de valence.

La modification de la stratégie par encouragement des sommets complets permet d'en réduire très significativement la longueur (voir résultats). Grâce à cette modification, il n'y a notamment plus d'offset prenant la valeur 2, ce qui correspond aux « encoches » de taille 2 (deux arêtes) dans la liste.

Un exemple de cette situation est illustrée en figure 17. La liste forme une « encoche » dans le maillage, et se prépare à générer un code de séparation de la liste (une affectation du sommet complet à l'intérieur de l'encoche comme pivot aurait permis dans ce cas la suppression de l'accident de codage pour un coût nul).

Il est à noter que sans cette modification, près de 80% des codes de séparation de liste correspondent à ces encoches. De plus, cette stratégie permet de soustraire le chiffre 2 aux valeurs d'offset, afin de réduire d'autant l'excursion des valeurs.

### 8.2.1.8 Train binaire

Le train binaire de la topologie correspond aux vecteurs de codes après codage entropique, ainsi qu'aux informations nécessaires et suffisantes pour assurer un décodage sans perte.

| Train binaire | | |
|---|---|---|
| Information | Type et taille (en bits) | Optionnel ? |
| Nombre de sommets | uint 32 entre 3 et 4e¹² sommets | non |
| Présence d'un fantôme ? | bit 1 / maillage avec ou sans bord(s) | non |
| Degré du fantôme | uint 16 maxi : 2e¹⁶ | oui |
| Max degré | uint 8 maxi : 255 | non |
| Valence après codage entropique | variable | non |
| Présence de séparations de listes ? | bit 1 | non |
| Max abs(offsets) | uint 16 | oui |
| abs(offsets) après codage entropique | variable | oui |
| Bits de signe | #offsets bit(s) | oui |
| Code de fusion | variable | oui |

### 8.3 Positions

Le codeur de topologie agit sur l'ordre des sommets, tout en favorisant la proximité géométrique de deux sommets successifs. En pratique, après le codage de la topologie, tous les sommets sont adjacents, excepté lors des sauts d'un bord à l'autre via le sommet fantôme, lors des changements de listes de conquête ou lors des affectation des sommets complets comme pivots.

Cette organisation incite au codage par différence (ou delta-encoding) des positions. Le résultat est prédit, quantifié puis compressé par codage entropique. Une valeur moyenne du taux de compression obtenu pour la topologie est située aux alentours de 50. Un codage sans perte équivalent pour les positions est déraisonnable, puisque la précision originale est très élevée (32 bits, 3.4e+/-38) et la redondance est faible.

En pratique le système de vision humaine, les algorithmes de rendu et les résolutions spatiales des écrans ne nécessitent pas une telle précision en ce qui concerne les applications de réalité virtuelle. Toutefois, il en va autrement pour les applications liées au calcul scientifique. C'est pourquoi il est proposé un codage échelonnable en précision sur les positions, de façon à s'adapter aux contraintes dictées par l'application, les réseaux et les performances des clients. Une quantification grossière sur les valeurs obtenues après prédiction permet de réduire significativement l'espace mémoire occupé par une première version d'un maillage, et donc de garantir une bonne échelonnabilité sur les données de position.

### 8.3.1 Prédiction

En observant le graphe formé par les segments reliant les sommets ordonnés par le codeur de topologie, on remarque des zones oscillantes en dents de scie 181, et des régions plus régulières 182, comme cela apparaît sur l'exemple de la figure 18, qui présente en haut à gauche l'ordre des conquêtes selon l'invention, appliquée au maillage source présenté sur la partie droite.

Sur les premières une prédiction suivant la méthode du parallélogramme 183 est bien adaptée, tandis qu'une prédiction linéaire 184 est préférée sur les seconds types de régions (figure 18). Les ruptures d'adjacences 185 sont codées comme accidents, et la simple différence est conservée. En pratique, deux bits de prédiction par sommet sont utilisés (et compressés par codage entropique) pour indiquer le mode de prédiction le plus adapté, c'est-à-dire celui qui minimise le résidu après prédiction.

Les résidus sont exprimés en ratio de la moyenne mobile des longueurs d'arêtes pour s'affranchir des variations de dynamique géométrique d'une région à l'autre du maillage. Il est à noter que les bits de prédiction se répercutent sur les trois composantes des coordonnées [x,y,z] d'un sommet.

Suivant le type de maillage, on peut définir au préalable une prédiction majoritaire vis-à-vis des différentes prédictions possibles. De ce fait, un classement des prédictions est réalisé par la mise en place d'un codage de coût inversement proportionnel à la probabilité d'apparition d'une desdites prédictions. La prédiction majoritaire est codée sur un bit, et la prédiction minoritaire (la prédiction "accident") est codée sur 3 bits. Ainsi, les prédictions sont codées en moyenne sur moins de deux bits, et peuvent être également compressées par codage entropique.

### 8.3.2 Quantification

La prédiction nécessite le codage de résidus signés. Les bits de signe sont extraits et codés sans compression car équiprobables. Après une opération de normalisation, les valeurs absolues des résidus sont quantifiées de façon linéaire et indépendante suivant une précision P (exprimée en nombre de bits) déterminée à l'avance.

Les positions des trois premiers sommets sont stockées sans compression, ainsi que le facteur d'échelle à appliquer lors du décodage sur chaque coordonnée.

### 8.3.3 Codage entropique

La distribution des valeurs après quantification est non uniforme, ce qui incite au codage entropique de ces dernières. Le même codeur entropique que celui utilisé pour la topologie est mis en oeuvre.

### 8.3.4 Codage des accidents

Une position transmise à pleine précision occupe 96 bits. En pratique, un accident de rupture d'adjacence dans la chaîne formée des sommets ordonnés par le code de topologie ne nécessite pas une telle précision, car la grandeur géométrique du saut d'adjacence est bornée par le volume englobant du maillage.

Soit u le vecteur correspondant à une moyenne vectorielle mobile des arêtes précédentes. Les sauts d'adjacence sont stockés en ratio entier d'un vecteur u' colinéaire à u et de norme avoisinant celle de u, u et u' étant colinéaires à l'orientation de l'accident. Le résidu r entre u et u' possède ensuite une faible excursion , du même ordre de grandeur qu'un résidu de simple différence.

Aucun bit de prédiction ne sera envoyé dans ce cas. Les ratios entiers liés aux accidents sont compressés à part par codage entropique, et le résidu r est codé par résidu de simple différence.

### 8.3.5 Raffinements géométriques

A ce stade du codage les trains binaires générés permettent de reconstruire un maillage que l'on espère le plus proche du maillage original. Pour permettre au décodeur de retrouver la précision originale progressivement, il s'agit de coder les raffinements géométriques en position des sommets. Cette opération est réalisée indépendamment par sommet, et utilise une version apparentée au codage par plans de bits, adapté à des nombres flottants. Cette technique est par exemple décrite par Li et Kuo, dans "progressive coding of 3D graphics models" (IEEE Computer Graphics 86 : 1052-1063, juin 1998).

Au départ l'erreur maximale de reconstruction est mesurée pour tous les sommets, et pour chaque coordonnée. Les erreurs sont ensuite normalisées dans l'intervalle [0;1], puis une quantification successive est réalisée indépendamment par coordonnée de manière à générer des expansions, ou trains binaires, de longueur (32-P) par sommet et par coordonnée. Plus l'erreur de reconstruction est faible, et plus le nombre de zéros consécutifs est élevé, et inversement.

Pour un nombre donné, l'ordre du premier chiffre 1 rencontré dans le train binaire est appelé son ordre de grandeur. Les autres bits sont des bits de raffinement. Ainsi, à partir des ordres de grandeur et des bits de raffinements il est possible de reconstruire un nombre. Si l'on fait l'hypothèse que l'ordre des sommets et la méthode de prédiction encourage la formation de nombres ayant un grand ordre de grandeur, car on cherche à minimiser l'erreur de reconstruction, alors il convient de coder les ordres de grandeur à part via un codeur entropique.

Les bits de raffinement sont stockés tels quels car équiprobables. Ils sont disposés par ordre de grandeur dans le train binaire, de façon à organiser les raffinements en trains binaires de plus en plus importants. Cette organisation correspond bien à un codage échelonnable, et dans le cas présent la granularité n'est pas régulière.

Le tableau ci-dessous montre des nombres compris dans l'intervalle [0;1] et leur expansion binaire. L'ordre du premier 1 rencontré dans le train binaire de chaque nombre est appelé ordre de grandeur. Les bits suivants sont des bits de raffinement équiprobables. La taille des plans verticaux de raffinement augmente en même temps que la précision souhaitée. Le premier bit de raffinement commence à l'ordre 1, le décodeur pouvant connaître cette information grâce aux ordres de grandeur transmis précédemment.

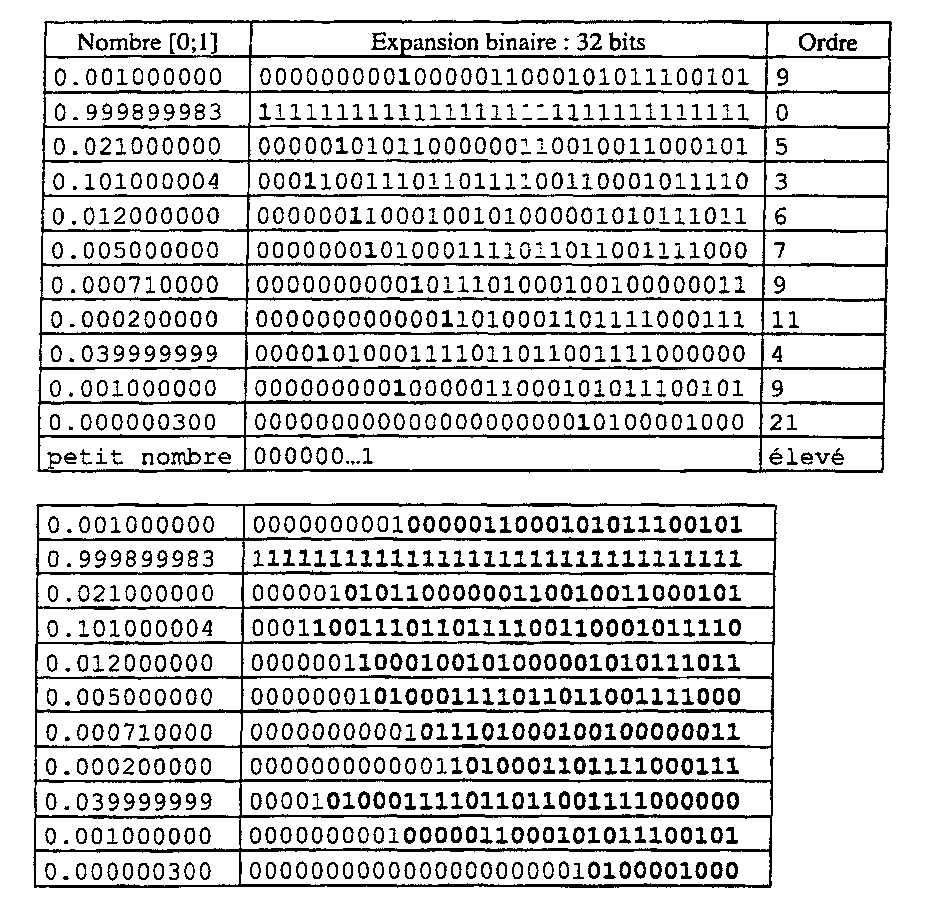

La taille des trains binaires verticaux des raffinements augmente de la façon suivante :
0-1-1-1-2-3-4-5-6-6-8-9-9-10-11-11-11-11-11-11-11-11-...

### 8.3.6 Train binaire

Soit N le nombre de sommets, les données sont organisées comme suit :

| Train binaire des positions | | |
|---|---|---|
| Information | Type et taille (en bits) | Optionnel ? |
| 3 premiers sommets : xyz | 3 x (3 x float 32) sans perte | non |
| Echelle : sx sy sz | 3 x float 32 | non |
| Précision P de quantification (en bits) | uint 5 maxi : 32 bits | non |
| Largeur du calcul de la moyenne mobile exprimée en nombre d'arêtes | uint 4 maxi : 16 arêtes | non |
| Bits de prédiction | 2 x (N-4) x 1 bit pas de prédiction possible avant le quatrième sommet | non |
| Bits de signe des résidus | (N-3) x 1 bit Le premier sommet est transmis tel quel | non |
| Valeurs absolues des résidus quantifiés après codage entropique | variable | non |
| Présence de raffinements ? | 1 bit | non |
| Facteur d'échelle des raffinements | 3 x float 32 | oui |
| Ordres de grandeur après codage entropique | variable | oui |
| Raffinement : ordre min. déduit | variable : r0 | oui |
| Raffinement : ordre min+1 | variable : r1 >= r0 | oui |
| Raffinement : ordre min+2 | variable : r2 >= r1 | oui |
| Raffinement : ordre min+3 | variable : r3 >= r2 | oui |
| Raffinement : ordre min+4 | variable : r4 >= r3 | oui |
| Raffinement : ordre min+5 | variable : r5 >= r4 | oui |
| Raffinement : ordre min+6 | variable : r6 >= r5 | oui |
| ... | ... | ... |

### 9. Décodage

Comme déjà mentionné, le procédé de codage décrit précédemment permet de réaliser de façon très simple le décodage, avec une très bonne vitesse et une quantité de mémoire peu importante par rapport aux techniques connues. On décode en effet au moins 10 fois plus vite, et en employant 4 fois moins de mémoire.

Le décodeur est capable de décompresser les données de structure et d'attributs de façon complètement indépendante. Toutefois, il commence par décompresser les positions P0, puis décode la topologie de manière à présenter dans un délai le plus bref une version visuellement acceptable du maillage à décoder.

### 9.1 Topologie

Le décodeur de topologie regénère les deux vecteurs de données à partir d'un décodeur entropique et des bits de signe codés tels quels :
- codes de degré
- codes d'offsets signés (optionnel)

Il lit aussi directement le nombre de sommets à décoder, la présence d'un fantôme ainsi que son degré.

### 9.1.1 Reconstruction

La technique présentée reconstruit les faces reliant les sommets à partir de l'information de degré des sommets, des codes réservés stockés dans le même vecteur de codes et des codes d'offsets. Il s'agit pour cela d'assurer au décodeur le même comportement que le codeur. Ce premier doit prendre les mêmes initiatives que le codeur, même lorsque aucune information n'a été transmise à cet effet. On parle alors de synchronisation codeur/décodeur.

La qualité d'un décodeur se mesure à sa vitesse de fonctionnement et à son coût mémoire. Nous verrons ci-après que la structure de données est très réduite par rapport au codeur, et que le décodage est plus simple que le codage, ce qui répond aux deux critères de qualité énoncés précédemment.

### 9.1.2 Initialisation

1. Un nouveau maillage composé uniquement de sommets est généré. Ces derniers sont ordonnés tels que codés par le codeur de positions.
2. Une structure de données peu volumineuse en mémoire est utilisée, puisque seule un nombre par sommet, correspondant au nombre d'arêtes libres, est requis, contrairement aux méthodes couramment utilisées qui construisent les mêmes structures d'adjacences complètes que le codeur.

| Maillage original | | Maillage et adjacence pour le décodage | |
|---|---|---|---|
| N sommets | F faces F ≈ 2 x N | N sommets | F faces F ≈ 2 x N |
| position : x y z 3 x 32 bits | références : si sj sk 3 x 32 bits | position : x y z 3 x 32 bits degrés libres 8 bits | références : si sj sk 3 x 32 bits |
| coût moyen : 144 bits/face | | coût moyen : 148 bits/face (1.027 x coût original) | |

3. Un sommet fantôme est généré, on ne lui renseigne que son degré, et il n'est pas directement ajouté au maillage.
4. Aucune liste d'arêtes n'est générée, il n'est donc pas nécessaire de réaliser un quelconque tri.
5. Une liste d'arêtes vide est générée et introduite dans la pile. Cette liste est appelée liste active. Les trois premiers codes sont retirés du vecteur de codes des degrés. Les trois premiers sommets du maillages sont renseignés de leur degré respectif, et une face correspondante est construite. Cette opération est illustrée en figure 19.
Lorsqu'un sommet est renseigné de son degré, il construit une liste de références à des sommets, toutes initialisées à des valeurs nulles. Ensuite on peut le renseigner sur un nouveau sommet voisin, qui remplace alors la première référence nulle trouvée. C'est ce qui est réalisé lors de la création de la première face : chaque sommet est déclaré voisin des deux autres. Ensuite le premier sommet est désigné comme pivot. La liste active est orientée dans le sens anti-horaire, et ainsi prête pour la reconstruction de la topologie du maillage.
Ainsi, dans l'exemple de la figure 19, les trois premiers codes [8], [6], [5] permettent de créer une face et de renseigner les sommets de leur valence respective. Le premier sommet 191 est nommé pivot. Les arêtes libres attendent une future connexion. A chaque « maillage » d'un sommet, son degré libre est décrémenté. Sur l'exemple de la figure 19, il reste 6 « degrés » libres sur 8 au total en ce qui concerne le sommet pivot 191.

### 9.1.3 La reconstruction

La liste active commence alors une reconstruction autour de son sommet pivot en générant les faces et en renseignant les sommets de leur degré lorsqu'ils sont retirés du vecteur de codes. Une partie des qualités d'un tel algorithme réside dans le fait qu'une ou plusieurs faces peuvent être aussi générées sans qu'aucun code ne soit transmis. Après chaque retrait et analyse d'un code l'algorithme peut prendre la décision de supprimer le sommet pivot de la liste active si ce dernier est complet (au sens strict) et réitère ce processus tant qu'aucun sommet n'est complet.

Lorsqu'une valeur est retirée du vecteur de codes cinq cas peuvent intervenir :
- code ≥ 4: il s'agit d'un degré, ou valence, incrémenté de 1 (il faut donc préliminairement systématiquement soustraire un de cette valeur). C'est le cas le plus simple puisqu'une seule face est créée entre le sommet précédent le pivot, le sommet correspondant au degré renseigné et le pivot. Cet ordre de description des sommets garantit la bonne orientation de la face. Le sommet est ajouté dans la liste avant la position du pivot et les degrés libres des sommets concernés sont décrémentés.
   La figure 20 donne ainsi un exemple de reconstruction. La situation 201 correspond au cas discuté en relation avec la figure 19. Les codes pris en compte sont donc [8], [6], [5], et le nombre de degrés libres du pivot est 6. Lors de l'opération suivante 202, on insère un sommet 2021 de degré [5] avant le pivot dans la liste. Le nombre de degré libre du pivot passe alors à 5. Ainsi, successivement lors des étapes 203 à 207, on insère des sommets jusqu'à ce que le nombre de degrés libres du pivot soit 0.
   On a donc reçu la séquence de code [8], [6], [5], [5], [6], [6], [5], [6], qui permettent un maillage progressif des sommets, de manière à reformer les faces originales du maillage.
- code = 0 : il s'agit d'un code réservé à l'insertion d'une occurrence du fantôme dans la liste active. Le fantôme précédemment généré est inséré dans la liste et les adjacences sont mises à jour. Aucune face n'est créée à cette occasion.
- code = 1 : il s'agit d'un code réservé à la séparation de la liste active en deux listes. L'offset signé permet de retrouver rapidement le sommet S à relier avec le pivot courant. Une face reliant le sommet précédant le pivot, le sommet S et le pivot est créée. Les listes sont séparées en deux listes de la même manière qu'au cours du codage. La nouvelle liste est élevée dans la pile, et sera active lorsque son tour viendra après le dépilement des listes la précédant.
   Aucune information n'est nécessaire pour changer de liste active puisque le décodeur est capable de savoir par lui-même lorsque la liste active est vide. La nouvelle liste hérite du pivot de la liste active, ou du premier sommet complet rencontré s'il existe à l'intérieur de ladite liste (comme décrit figure 16 bis lors du codage).
- code *=* 2 : il s'agit d'un code réservé indiquant la fusion de deux listes.
- code = 3: il s'agit d'un code réservé à l'information de sommet contextuellement complet. On force la liste active à supprimer son pivot même s'il n'est pas complet, à en changer et à générer une face. De cette manière, il n'est pas nécessaire de reconstruire une structure de données basée arêtes au décodeur. Le gain mémoire et la vitesse d'exécution sont significatifs.
   Après la décision relative à chaque retrait d'un code, le décodeur regarde si le sommet pivot est complet, c'est-à-dire si la liste de ses sommets adjacents est entièrement renseignée. Si c'est le cas une face reliant le sommet précédant, le sommet suivant et le pivot est créée (figure 21). Le pivot est ensuite supprimé de la liste, et les degrés libres sont mis à jour.

Le sommet suivant l'ancien pivot est affecté comme nouveau pivot. sauf si un sommet complet est détecté sur la liste suivant la même loi qu'au cours du codage. Cette opération est itérée tant que le nouveau pivot est complet. Ainsi une région entière peut être maillée avec un coût de codage nul.

Un exemple d'une telle situation est illustrée en figure 21. Le pivot est complet. Une face 210 reliant le sommet précédent 211, le sommet suivant 212 et le sommet pivot 213 est créé avec un coût nul. Le nouveau pivot est affecté au sommet suivant 214. ou au premier sommet complet rencontré dans la liste.

On notera qu'une telle création de face met à jour l'adjacence de deux sommets, et réduit donc le nombre de degrés « libre(s) » de 1 pour chacun, ce qui tend à rendre lesdits sommets complets. Une telle stratégie de conquête permet un gain moyen de l'ordre de 35 %.

### 9.2 Positions

Les premières données sont directement lues dans le train binaire, tandis que les données codées par le codeur entropique sont décompressées via le décodeur correspondant. La précision de quantification permet d'initialiser le décodeur entropique, et les facteurs d'échelle pour chaque coordonnée permettent de replacer les sommets à leur position originale, modulo la perte de précision liée à la quantification.

Sur les trois premiers sommets, aucune moyenne mobile n'est calculée. La prédiction n'est possible qu'après le décodage de trois sommets.

### 9.2.1 Décodage d'une position

La moyenne mobile M des L longueurs d'arête précédentes est calculée. Le résidu est signé, mis à l'échelle, multiplié par M et appliqué au sommet prédit en fonction de la loi renseignée par le bit de prédiction.

### 9.2.2 Décodage des raffinements

En présence de bits de raffinements, les positions des sommets sont ajustées indépendamment. Un vecteur de trains binaires est généré, la longueur de chacun étant initialisée à 32 bits (la précision d'un nombre flottant). Les valeurs de ces trains binaires sont initialisées en fonction des ordres de grandeurs, et le premier niveau de raffinement est reconstruit via le facteur d'échelle. Chaque ordre de grandeur permet ainsi la génération d'un train binaire, et sans plus d'informations le bit suivant l'ordre de grandeur est initialisé à 1, ce qui permet de favoriser le milieu de l'intervalle comprenant la valeur finale. Cependant les prochains bits de raffinements pouvant remettre en cause ce choix, tout en étant toujours suivi du chiffre 1 pour la même raison.

### 9.2.3 Exemples

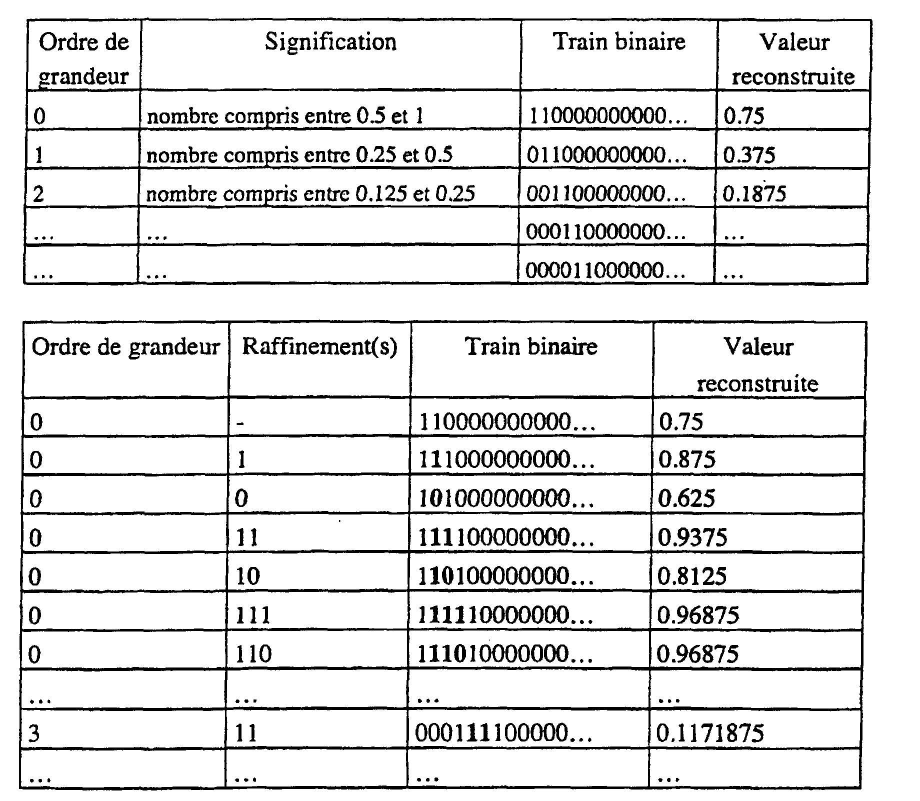

### 10. Exemple de résultats

L'annexe montre, en relation avec les figures 22 à 28, l'efficacité des procédés de codage et de décodage de l'invention, sur des exemples classiques.

### ANNEXE

### 1. Codage

Le tableau suivant rend compte des résultats obtenus par la méthode de conquête par arêtes, avec ou sans encourager les sommets complets comme candidats au pivot. Les figures 22 à 27 illustrent le parcours des sommets au cours de la conquête sur les arêtes des maillages. La figure 28 montre l'influence de la face germe choisie sur le coût de codage du maillage « suzie ».

Les variations sont faibles en fonction de la face choisie, mais il est préférable de choisir une face du bord si le sommet en comporte. Ces variations s'accentuent lorsque le nombre de faces à coder diminue.

| Maillage | Faces | Sommets | Nombre de codes d'offsets | | Coût topologie (bit(s)/face) | | Gain |
|---|---|---|---|---|---|---|---|
| | | | sans optimisation | avec optimisation | sans optimisation | avec optimisation | |
| Nefertiti irregular 1 | 3 893 | 1 967 | 194 | 24 | 1.05677 | 0.754174 | 28 % |
| Ncfertiti irregular 2 | 15 533 | 7 787 | 398 | 26 | 0.453 | 0.27 | 40 % |
| Nefertiti irregular 3 | 68 780 | 34 437 | 810 | 27 | 0.245 | 0.149 | 40 % |
| Nefertiti regular 1 | 4952 | 2504 | 161 | 10 | 0.811 | 0.578 | 28 % |
| Suzie | 867 | 468 | 72 | 6 | 2.3 | 1.72 | 25 % |
| Fandisk | 12 946 | 6475 | 247 | 5 | 0.676 | 0.521 | 22 % |
| Bunny | 29 783 | 15 000 | 354 | 30 | 1.40 | 1.02 | 27 % |
| Venus | 1 396 | 711 | 83 | 3 | 1.71 | 1.30 | 24 % |
| Rhombi regular base | 44 | 24 | 2 | 0 | 4.227 | 2.568 | 72 % |
| Rhombi regular 1 | 176 | 90 | 4 | 0 | 1.477 | 0.96 | 35 % |
| Rhombi regular 2 | 704 | 354 | 8 | 1 | 0.511 | 0399 | 22 % |
| Rhombi regular 3 | 2 816 | 1410 | 16 | 0 | 0.190 | 0.088 | 53 % |
| Rhombi regular 4 | 11 264 | 5634 | 32 | 2 | 0.069 | 0.034 | 50 % |
| Rhombi regular 5 | 45 000 | 22 500 | 64 | 0 | 0.023 | 0.008 | 65 % |
| Rhombi regular 6 | 180000 | 90 000 | 128 | 2 | 0.01 | 0.00365 | % |

### 2. Vitesse

Les temps de calcul suivants sont mesurés sur un processeur de type Pentium II (marque déposée) 266 MHz, avec 128 Mo de mémoire.

| Maillage | Faces | Sommets | Vitesse | | NbFaces/s | |
|---|---|---|---|---|---|---|
| | | | sans optimisation | avec optimisation | sans optimisation | avec optimisation |
| Nefertiti irregular 1 | 3893 | 1967 | 200 ms | 320 ms | 19 368 | 12 165 |
| Ncfertiti irregular 2 | 15 533 | 7 787 | 791 ms | 2.44 s | 19 637 | 6 355 |
| Nefertiti irregular 3 | 68 780 | 34 437 | 3575 s | 19 s | 19 239 | 3 549 |
| Nefertiti regular 1 | 4952 | 2504 | 240 ms | 460 ms | 20 633 | 10 765 |
| Suzie | 867 | 468 | 50 ms | 60 ms | 17 340 | 14 450 |
| Fandisk | 12 946 | 6475 | 0.671 | 1.723 s | 19 293 | 7 500 |
| Bunny | 29 783 | 15 000 | 1.62 s | 3.836 s | 18 500 | 7 764 |
| Venus | 1 396 | 711 | 70 ms | 90 ms | 19 942 | 15 511 |
| Rhombi regular | 44 | 24 | - | - | - | - |
| Rhombi regular 1 | 176 | 90 | 10 ms | 10 ms | 17600 | 17 600 |
| Rhombi regular 2 | 704 | 354 | 40 ms | 51 ms | 17 600 | 13 800 |
| Rhombi regular 3 | 2816 | 1410 | 120 ms | 230 ms | 23 400 | 12 240 |
| Rhombi regular 4 | 11264 | 5634 | 530 ms | 1.392 s | 21 300 | 8 900 |
| Rhombi regular 5 | 45 000 | 22 500 | 2.193 s | 9.314 s | 20 500 | 4 800 |
| Rhombi regular 6 | 180 000 | 90 000 | 9.43 s | 1.13 min | 19 000 | 2 600 |

### 3. Coût mémoire

Les coûts suivants sont théoriques, ils donnent une idée de l'ordre de grandeur des quantités de mémoire utilisées pour le maillage original, le codage et le décodage.

| Maillage | Faces | Sommets | Original (octets) ≈ décodage | Codage |
|---|---|---|---|---|
| Nefertiti irregular 1 | 3 893 | 1 967 | 70 320 | 305 540 |
| Nefertiti irregular 2 | 15 533 | 7 787 | 279 840 | 1 213 460 |
| Nefertiti irregular 3 | 68 780 | 34 437 | 1 238 604 | 5 369 164 |
| Suzie | 867 | 468 | 16 020 | 70 800 |
| Fandisk | 12 946 | 6475 | 233 052 | 1 009 972 |
| Bunny | 29 783 | 15 000 | 537 396 | 2 333 056 |
| Venus | 1 396 | 711 | 25 284 | 110 084 |
| Rhombi regular base | 44 | 24 | 816 | 3 616 |
| Rhombi regular 1 | 176 | 90 | 3 192 | 13 912 |
| Rhombi regular 2 | 704 | 354 | 12 696 | 55 096 |
| Rhombi regular 3 | 2 816 | 1410 | 50 712 | 219 832 |
| Rhombi regular 4 | 11 264 | 5634 | 202 776 | 878 776 |
| Rhombi regular 5 | 45 000 | 22 500 | 810 000 | 3 510 000 |
| Rhombi regular 6 | 180 000 | 90 000 | 3 240 000 | 14 040 000 |

## Revendications

1. Procédé de codage d'un maillage représentatif d'un objet en trois dimensions (3D),
ledit maillage étant constitué d'un arrangement de sommets, définis par leur position dans l'espace, et de faces triangulaires, définies chacune par trois références aux sommets qu'elle relie, et présentant trois arêtes reliant chacune deux desdits sommets,
une adjacence complète étant construite sur lesdits sommets, lesdites faces et lesdites arêtes lors de l'initialisation dudit collage,
ledit procédé comprenant une étape de collage de la topologie desdits sommets (2932) et une étape de collage de la position desdits sommets (2933),
ladite étape de collage de la topologie comprenant :
(a) une initialisation (301) du processus de collage, comprenant une sélection arbitraire d'une face germe et d'un sommet pivot germe, pris comme sommet pivot courant, dans une liste de faces et une liste de sommets respectivement ;
(b) une conquête (302) des arêtes adjacentes au sommet pivot courant (31), suivant une orientation topologique prédéterminée (32), chaque arête étant marquée lorsqu'elle a été conquise ;
(c) une sélection (303) d'un nouveau sommet pivot courant, sélectionnant en tant que sommet pivot :
- un sommet complet, c'est-à-dire un sommet dont toutes les arêtes auxquelles il est relié sont marquées lorsqu'un tel sommet est accessible, c'est-à-dire lorsque ce sommet est relié au sommet pivot courant précédent par une arête ;
- le sommet suivant le sommet pivot courant dans ladite liste de sommets, s'il n'y a pas de sommet complet accessible ;
(d) retour à l'étape (b) jusqu'à ce que l'ensemble dudit maillage ait été parcouru.

2. Procédé de collage selon la revendication 1, **caractérisé en ce que** l'on traite spécifiquement les sommets contextuellement complets, un sommet étant contextuellement complet lorsqu'il n'y a aucune arête non conquise dans le secteur angulaire orienté dans le sens à ladite orientation topologique prédéterminée et défini par deux arêtes reliant ledit sommet et, respectivement, le sommet précédent et le sommet suivant dans la liste de référence correspondante.

3. Procédé de codage selon l'une quelconque des revendications 1 et 2, **caractérisé en ce que** ladite étape de codage de la topologie (2932) utilise un ensemble de listes d'arêtes, organisé sons la forme d'une pile, une seule liste, dite liste active, étant utilisée à un instant donné, contenant une information relative à un sommet pivot et au nombre d'arêtes, ou valence, associé à chacun des sommets consécutifs considérés lors de ladite conquête.

4. Procédé de codage selon la revendication 3, **caractérisé en ce que** ladite étape de codage de la topologie (2932) met en oeuvre une conquête de l'ensemble des arêtes situées autour dudit pivot courant de la liste active en traitant ses sommets voisins,
et une génération d'un code de valence pour chacun desdits sommets voisins, représentatif du nombre de sommets adjacents auxdits sommets voisins, et, le cas échéant, d'un code spécifique, représentatif d'une particularité, pour ledit sommet pivot courant.

5. Procédé selon l'une quelconque des revendications 3 et 4, **caractérisé en ce que**, lorsqu'au cours de ladite étape (b), on rencontre une arête reliant deux sommets appartenant à ladite liste active, cette dernière est séparée en deux listes à la position du sommet pivot courant,
une sous-liste, dite liste fermée ou boucle, entourant les triangles dont les arêtes ne sont pas conquises, étant créée, et élevée dans ladite pile.

6. Procédé selon l'une quelconque des revendications 3 à 5, **caractérisé en ce que**, lorsqu'au cours de ladite étape (b), on rencontre une arête reliant ledit sommet pivot courant à un sommet voisin appartenant à une liste contenue dans ladite pile, dite liste inactive, on fusionne ladite liste active et ladite liste inactive, cette dernière étant supprimée de ladite pile.

7. Procédé selon l'une quelconque des revendications 4 à 6, **caractérisé en ce que** lesdites particularités appartiennent au groupe comprenant :
- les sommets appartenant au bord dudit maillage ;
- les sommets contextuellement complets ;
- les fusions de listes ;
- les séparations de liste.

8. Procédé de codage selon l'une quelconque des revendications 1 à 7, **caractérisé en ce que** ladite étape de codage de la topologie (2932) génère un code spécifique, dit code fantôme, pour le codage des bords dudit maillage, un sommet pivot courant situé sur un bord dudit maillage conquérant une arête virtuelle le reliant à un sommet fantôme, associé audit code fantôme, afin de conserver l'information de contour liée aux sommets adjacents dudit sommet pivot courant.

9. Procédé de codage selon les revendications 7 et 8, **caractérisé en ce que** les valeurs possibles dans ladite liste active sont :
- entiers supérieurs ou égaux à 4 : valence d'un sommet, décalée d'une unité ;
- 0 : code indiquant l'insertion d'une occurrence dudit sommet fantôme ;
- 1 : code indiquant la séparation de ladite liste active en deux listes ;
- 2 : code indiquant la fusion de deux listes ;
- 3 : code indiquant la présence d'un sommet contextuellement complet.

10. Procédé selon l'une quelconque des revendications 1 à 9, **caractérisé en ce que** ladite étape de codage de la topologie (2932) comprend une étape de sélection du premier sommet pivot, dit sommet initiateur, selon laquelle on retient comme sommet initiateur un sommet appartenant au bord dudit maillage, lorsque ce dernier existe.

11. Procédé de codage selon la revendication 10, **caractérisé en ce que** ledit sommet initiateur est, parmi l'ensemble des sommets appartenant au bord dudit maillage (ou audit maillage, en l'absence de bord), celui qui présente la valence la plus élevée.

12. Procédé de codage selon l'une quelconque des revendications 3 à 10, **caractérisé en ce que** les valeurs contenues clans ladite liste active sont codées à l'aide d'un codeur entropique (305) à modèle adaptatif.

13. Procédé de collage selon la revendication 12, **caractérisé en ce qu'**on soustrait systématiquement le nombre 2 aux valeurs de saut en position de séparation de listes codées par ledit codeur entropique (305).

14. Procédé de codage selon l'une quelconque des revendications 1 à 13, **caractérisé en ce que** ladite étape de codage des positions (2933) met en oeuvre un codage par prédiction de la position d'un sommet donné, en fonction de la position de sommets précédemment codés.

15. Procédé de codage selon la revendication 14, **caractérisé en ce que** ladite étape de prédiction de la position utilise au moins une des prédictions appartenant au groupe comprenant :
- une prédiction suivant la méthode du parallélogramme, si le sommet considéré appartient à une région oscillante ;
- une prédiction linéaire, si le sommet considéré appartient à une zone de type régulier ;
- une simple différence, lorsque aucune des deux précédentes prédictions ne diminue l'excursion du résidu ;
- un code d'accident, pour signaler les ruptures d'adjacence.

16. Procédé de codage selon l'une quelconque des revendications 14 et 15, **caractérisé en ce que** ladite étape de collage des positions met en oeuvre un codage des résidus après prédiction, dits résidus de prédiction.

17. Procédé de collage selon la revendication 16, **caractérisé en ce que** ladite étape de collage des résidus de prédiction normalise lesdits résidus grâce à un calcul de moyenne mobile suivant des longueurs d'arêtes successives.

18. Procédé de collage selon la revendication 17, **caractérisé en ce que** ladite moyenne mobile est calculée sur les longueurs de N arêtes associées aux valeurs des positions des sommets précédant le sommet dont la position est à coder.

19. Procédé selon l'une quelconque des revendications 14 à 18 ,**caractérisé en ce que** ladite étape de collage des positions (2933) met en oeuvre une étape de quantification des valeurs absolues des résidus de prédiction, les bits de signe desdits résidus de prédiction étant transmis indépendamment, sans compression.

20. Procédé de collage selon la revendication 19, **caractérisé en ce que** ladite étape de quantification des résidus de prédiction tient compte d'un choix préalable de l'utilisateur de la précision, en nombre de bits souhaité, pour chacun desdits résidus de prédiction, afin d'obtenir une première estimation plus ou moins grossière du maillage.

21. Procédé de collage selon l'une quelconque des revendications 16 à 20, **caractérisé en ce que** ladite étape de collage des résidus de prédiction des positions met en oeuvre un collage entropique desdits résidus similaire au collage entropique mis en oeuvre lors de ladite étape de collage de la topologie.

22. Procédé de collage selon l'une quelconque des revendications 15 à 21, **caractérisé en ce que** lesdits accidents sont codés sous la forme d'un ratio entier d'un vecteur voisin de la moyenne vectorielle mobile et d'un résidu associé codé comme un résidu différentiel, lesdits ratios entiers étant compressés par codage entropique.

23. Procédé de codage selon l'une quelconque des revendications 16 à 22, **caractérisé en ce que** l'on prend en compte la différence entre lesdits résidus exacts des prédictions des positions et lesdits résidus quantifiés desdites prédictions de positions, dits résidus différentiels.

24. Procédé de collage selon la revendication 23, **caractérisé en ce qu'**on effectue les opérations suivantes :
- normalisation desdits résidus différentiels entre 0 et 1 ;
- transmission indépendante et sans compression des bits de signe desdits résidus différentiels ;
- expansion binaire pour chacune des valeurs absolues desdits résidus différentiels normalisés.

25. Procédé de codage selon l'une quelconque des revendications 16 à 24, **caractérisé en ce que** ladite étape de codage desdits résidus différentiels détermine la position du premier 1 rencontré dans chacune desdites expansions binaires desdits résidus différentiels, ou ordre de grandeur, et met en oeuvre un codage entropique desdits ordres de grandeur.

26. Procédé de codage selon l'une quelconque des revendications 24 et 25, **caractérisé en ce que** lesdites étapes de raffinement successives consistent à transmettre les bits de raffinement des résidus différentiels en réalisant un parcours complet, dans l'ordre des sommets, un bit par sommet.

27. Procédé de codage selon la revendication 26, **caractérisé en ce que** pour chacun desdits niveaux de raffinements, l'ensemble des bits de raffinement correspondant à un ordre de grandeur sont transmis.

28. Procédé de décodage de données codées à l'aide du procédé de codage de l'une quelconque des revendications 1 à 27, **caractérisé en ce qu'**il comprend une étape de décodage de la position des sommets, suivie d'une étape de décodage de la topologie.

29. Procédé de décodage selon la revendication 28, **caractérisé en ce que** ladite étape de décodage de la position des sommets comprend une étape de décodage de la position des trois premiers sommets, suivie d'une étape de décodage des résidus quantifiés de prédiction des autres sommets.

30. Procédé de décodage selon l'une quelconque des revendications 28 et 29, **caractérisé en ce que** ladite étape de décodage de la topologie tient compte dudit code spécifique réservé aux sommets contextuellement complets pour reconstruire ladite topologie sans information relative à l'adjacence faces / sommets / arêtes.

31. Procédé de décodage selon l'une quelconque des revendications 29 et 30, **caractérisé en ce que** ladite étape de décodage des résidus des positions des sommets met en oeuvre une étape de raffinement géométrique, consistant à raffiner progressivement la précision de la position desdits sommets.

32. Procédé de décodage selon la revendication 31, **caractérisé en ce que** ladite étape de décodage des résidus des positions des sommets ajoute systématiquement le bit 1 à chaque expansion binaire courante du train binaire versant d'être reçue, afin d'améliorer la qualité de reconstruction du maillage en cours.

## Claims

1. Method for encoding a mesh representing an object in three dimensions (3D),
the said mesh consisting of an arrangement of vertices, defined by their position in space, and triangular faces, each defined by three references to the vertices which it connects and having three edges, each connecting two of the said vertices,
complete adjacency being constructed over the said vertices, the said faces and the said edges during the initialisation of the said encoding,
the said method comprising a step of encoding the topology of the said vertices (2932) and a step of encoding the position of the said vertices (2933),
the said step of encoding the topology comprising:
(a) an initialisation (301) of the encoding process, comprising an arbitrary selection of a seed face and of a seed pivot vertex, taken as the current pivot vertex, from a list of faces and a list of vertices, respectively;
(b) a conquest (302) of the edges adjacent to the current pivot vertex (31), according to a predetermined topological orientation (32), each edge being marked when it has been conquered;
(c) a selection (303) of a new current pivot vertex, selecting as the pivot vertex:
- a complete vertex, that is to say a vertex of which all the edges to which it is connected are marked, when such a vertex is accessible, that is to say when this vertex is connected to the preceding current pivot vertex by an edge;
- the vertex following the current pivot vertex in the said list of vertices, if there is no accessible complete vertex;
(d) return to step (b) until all of the said mesh has been dealt with.

2. Encoding method according to Claim 1, **characterised in that** the contextually complete vertices are processed specifically, a vertex being contextually complete when there is no unconquered edge in the angular sector oriented in the sense with the said predetermined topological orientation and defined by two edges connecting the said vertex and, respectively, the preceding vertex and the following vertex in the corresponding reference list.

3. Encoding method according to either one of Claims 1 and 2, **characterised in that** the said step of encoding the topology (2932) uses a set of edge lists which is organised in the form of a stack, a single list, referred to as the active list, being used at a given instant, containing information relating to a pivot vertex and to the number of edges, or valency, associated with each of the consecutive vertices considered during the said conquest.

4. Encoding method according to Claim 3, **characterised in that** the step of encoding the topology (2932) implements a conquest of all of the edges situated around the said current pivot of the active list by processing its neighbour vertices,
and generation of a valency code for each of the said neighbour vertices, representing the number of vertices adjacent to the said neighbour vertices, and optionally a specific code representing a feature for the said current pivot vertex.

5. Method according to either one of Claims 3 and 4, **characterised in that** when, during the said step (b), an edge connecting two vertices belonging to the said active list is encountered, the latter is separated into two lists at the position of the current pivot vertex,
a sub-list, referred to as a closed or loop list, encompassing the triangles whose edges are not conquered, being created and promoted in the said stack.

6. Method according to any one of Claims 3 to 5, **characterised in that** when, during the said step (b), an edge connecting the said current pivot vertex to a neighbour vertex belonging to a list contained in the said stack, referred to as an inactive list, is encountered, the said active list and the said inactive list are merged, the latter list being removed from the said stack.

7. Method according to any one of Claims 4 to 6, **characterised in that** the said features belong to the group comprising:
- the vertices belonging to the border of the said mesh;
- the contextually complete vertices;
- the list mergers;
- the list separations.

8. Encoding method according to any one of Claims 1 to 7, **characterised in that** the said step of encoding the topology (2932) generates a specific code, referred to as a phantom code, for encoding the borders of the said mesh, a current pivot vertex situated on a border of the said mesh conquering a virtual edge connecting it to a phantom vertex, associated with the said phantom code, in order to keep the contour information connected with the vertices adjacent to the said current pivot vertex.

9. Encoding method according to Claims 7 and 8, **characterised in that** the possible values in the said active list are:
- integers greater than or equal to 4: valency of a vertex, offset by one unit;
- 0: code indicating the insertion of an occurrence of the said phantom vertex;
- 1: code indicating the separation of the said active list into two lists;
- 2: code indicating the merger of two lists;
- 3: code indicating the presence of a contextually complete vertex.

10. Method according to any one of Claims 1 to 9, **characterised in that** the said step of encoding the topology (2932) comprises a step of selection of the first pivot vertex, referred to as the initiator vertex, according to which a vertex belonging to the border of the said mesh, when the latter exists, is adopted as the initiator vertex.

11. Encoding method according to Claim 10, **characterised in that** the said initiator vertex is, among all of the vertices belonging to the border of the said mesh (or to the said mesh, in the absence of any border), the one which has the highest valency.

12. Encoding method according to any one of Claims 3 to 10, **characterised in that** the values contained in the said active list are encoded with the aid of an adaptive-model entropic encoder (305).

13. Encoding method according to Claim 12, **characterised in that** the number 2 is systematically subtracted from the separating position jump values of lists encoded by the said entropic encoder (305).

14. Encoding method according to any one of Claims 1 to 13, **characterised in that** the said step of encoding the positions (2933) implements predictive encoding of the position of a given vertex, as a function of the position of previously encoded vertices.

15. Encoding method according to Claim 14, **characterised in that** the said step of predicting the position uses at least one of the predictions belonging to the group comprising:
- prediction according to the parallelogram method, if the vertex in question belongs to an oscillating region;
- linear prediction, if the vertex in question belongs to a zone of regular type;
- simple difference, when neither of the two previous predictions reduces the excursion of the residue;
- an accident code, in order to signal the adjacency breaks.

16. Encoding method according to either one of Claims 14 and 15, **characterised in that** the said step of encoding the positions implements encoding of the residues after prediction, referred to as prediction residues.

17. Encoding method according to Claim 16, **characterised in that** the said step of encoding the prediction residues normalises the said residues by using a moving average calculation based on the lengths of successive edges.

18. Encoding method according to Claim 17, **characterised in that** the said moving average is calculated over the lengths of N edges associated with the values of the positions of the vertices preceding the vertex whose position is to be encoded.

19. Method according to any one of Claims 14 to 18, **characterised in that** the said step of encoding the positions (2933) implements a step of quantisation of the absolute values of the prediction residues, the sign bits of the said prediction residues being transmitted independently, without compression.

20. Encoding method according to Claim 19, **characterised in that** the said step of quantisation of the prediction residues takes into account a prior choice by the user of the precision, in number of bits desired, for each of the said prediction residues, in order to obtain a more or less coarse first estimate of the mesh.

21. Encoding method according to any one of Claims 16 to 20, **characterised in that** the said step of encoding the prediction residues of the positions implements entropic encoding of the said residues, which is similar to the entropic encoding implemented during the said step of encoding the topology.

22. Encoding method according to any one of Claims 15 to 21, **characterised in that** the said accidents are encoded in the form of an integer ratio of a neighbour vector of the moving vector average and of an associated residue encoded as a differential residue, the said integer ratios being compressed by entropic encoding.

23. Encoding method according to any one of Claims 16 to 22, **characterised in that** the difference between the said exact residues of the predictions of the positions and the said quantised residues of the said predictions of positions, referred to as differential residues, are taken into account.

24. Encoding method according to Claim 23, **characterised in that** the following operations are carried out:
- normalisation of the said differential residues between 0 and 1;
- independent transmission, without compression, of the sign bits of the said differential residues;
- binary expansion for each of the absolute values of the said normalised differential residues.

25. Encoding method according to any one of Claims 16 to 24, **characterised in that** the said step of encoding the said differential residues determines the position of the first 1 encountered in each of the said binary expansions of the said differential residues, or order of magnitude, and implements entropic encoding of the said orders of magnitude.

26. Encoding method according to either one of Claims 24 and 25, **characterised in that** the said successive refinement steps consist in transmitting the refinement bits of the differential residues by performing a complete pass, in the order of the vertices, one bit per vertex.

27. Encoding method to Claim 26, **characterised in that** for each of the said refinement levels, all of the refinement bits corresponding to an order of magnitude are transmitted.

28. Method for decoding data encoded with the aid of the encoding method according to any one of Claims 1 to 27, **characterised in that** it comprises a step of decoding the position of the vertices, followed by a step of decoding the topology.

29. Decoding method according to Claim 28, **characterised in that** the said step of decoding the position of the vertices comprises a step of decoding the position of the first three vertices, followed by a step of decoding the quantised prediction residues of the other vertices.

30. Decoding method according to either one of Claims 28 and 29, **characterised in that** the said step of decoding the topology takes into account the said specific code reserved for the contextually complete vertices in order to reconstruct the said topology without information relating to the face/vertex/edge adjacency.

31. Decoding method according to either one of Claims 29 and 30, **characterised in that** the said step of decoding the residues of the positions of the vertices implements a geometrical refinement step, consisting in progressively refining the precision of the position of the said vertices.

32. Decoding method according to Claim 31, **characterised in that** the said step of decoding the residues of the positions of the vertices systematically adds the bit 1 to each current binary expansion of the bit stream which has just been received, in order to improve the quality of reconstruction of the mesh in progress.

## Patentansprüche

1. Kodierverfahren eines für einen dreidimensionalen Gegenstand (3D) repräsentativen Netzwerkes,
wobei dieses Netzwerk gebildet wird aus einer Anordnung von Knoten, die durch ihre Position im Raum definiert sind und von Dreiecksflächen, die jeweils durch drei Referenzen zu denen von ihnen verbundenen Knoten definiert sind und die jeweils drei Kanten aufweisen, die jeweils zwei Knoten verbinden,
wobei eine vollständige Adjazenz über den Knoten, Flächen und Kanten beim Initialisieren der Kodierung erzeugt wird,
wobei das Verfahren einen Schritt zum Kodieren der Topologie der Knoten (2932) sowie einen Schritt zum Kodieren der Position der Knoten (2933) umfasst,
wobei der Schritt zum Kodieren der Topologie umfasst:
(a) eine Initialisierung (301) des Kodierverfahrens, welche die freie Wahl einer Ausgangsfläche und eines als Drehpunkt wirkenden und als jeweils geltenden Drehpunkt verwendeten Ausgangsknotens umfasst; jeweils aus einer Liste der Flächen und aus einer Liste der Knoten,
(b) eine Einnahme (302) der dem jeweils geltenden Drehpunktknoten (31) benachbarten Kanten, nach einer vorgegebenen topologischen Orientierung (32), wobei jede Kante nach ihrer Einnahme markiert wird;
(c) eine Wahl (303) eines neuen jeweils geltenden Drehpunktknotens, wobei die Wahl folgendermaßen getroffen wird:
- ein vollständiger Knoten, d.h. ein Knoten derart, dass alle mit ihm verbundenen Kanten markiert sind, wenn dieser Knoten zugänglich ist, d.h. wenn er durch eine Kante mit dem vorhergehenden jeweils geltenden Drehpunktknoten verbunden ist;
- der in der bereits erwähnten Knotenliste auf den jeweils geltenden Drehpunktknoten folgende Knoten, falls es keinen zugänglichen vollständigen Knoten gibt;
(d) Rückkehr zum Schritt (b), bis die Gesamtheit des Netzwerkes durchlaufen wurde.

2. Kodierverfahren nach Anspruch 1, **dadurch gekennzeichnet, dass** Kontextvollständige Knoten spezifisch verarbeitet werden, wobei ein Knoten Kontextvollständig ist, wenn es keine nicht eingenommene Kante in dem Winkelsektor gibt, der in die Richtung der erwähnten vorgegebenen topologischen Orientierung orientiert ist und von zwei jeweils den betrachteten Knoten mit dem in der entsprechenden Referenzliste vorhergehenden Knoten bzw. mit dem nachfolgenden Knoten verbindenden Kanten definiert wird.

3. Kodierverfahren nach einem der Ansprüche 1 oder 2, **dadurch gekennzeichnet, dass** der Schritt zum Kodieren der Topologie (2932) eine Menge von stapelförmig organisierten Kantenlisten verwendet, wobei eine einzige, Aktivliste genannte Liste, zu einem gegebenen Zeitpunkt verwendet wird, wobei diese Liste eine Information bezüglich eines Drehpunktknotens und der Kantenzahl oder Valenz umfasst, die mit einem jeden der bei der bereits erwähnten Einnahme nachfolgenden Knoten zusammenhängt.

4. Kodierverfahren nach Anspruch 3, **dadurch gekennzeichnet, dass** beim Schritt zum Kodieren der Topologie (2932) die Einnahme der Gesamtheit der um den jeweils geltenden Drehpunktknoten liegenden Kanten beim Verarbeiten der benachbarten Knoten stattfindet; ferner das Erzeugen eines Valenzcodes für jeden der benachbarten Knoten, wobei der Code repräsentativ für die Zahl der mit den erwähnten benachbarten Knoten jeweils benachbarten Knoten ist und gegebenenfalls das Erzeugen eines spezifischen Codes, der für eine Besonderheit des jeweils geltenden Drehpunktknotens repräsentativ ist.

5. Verfahren nach einem der Ansprüche 3 oder 4, **dadurch gekennzeichnet dass**, wenn im Verlauf des Schrittes (b) eine Kante angetroffen wird, die zwei in der Aktivliste aufgeführte Knoten verbindet, diese Liste in zwei Listen an der Position des jeweils geltenden Drehpunktknotens aufgeteilt wird,
wobei eine die Dreiecke, deren Kanten nicht eingenommen sind, umfassende geschlossene Liste oder Schleife genannte Unterliste erzeugt und in den Stapel hochgereicht wird.

6. Verfahren nach einem der Ansprüche 3 bis 5, **dadurch gekennzeichnet dass**, wenn im Verlauf des Schrittes (b) eine Kante angetroffen wird, die den jeweils geltenden Drehpunktknoten mit einem benachbarten Knotenpunkt aus einer inaktive Liste genannten Liste des Stapels verbindet, die aktive Liste und die inaktive Liste bereits zusammengelegt werden, wobei letztere aus dem Stapel eliminiert wird.

7. Verfahren nach einem der Ansprüche 4 bis 6, **dadurch gekennzeichnet, dass** die Besonderheiten der folgendes umfassenden Gruppe angehören:
- die dem Rand des Netzwerkes angehörenden Knoten;
- die Kontext-vollständigen Knoten;
- die Listenzusammenlegungen;
- die Listenaufteilungen.

8. Kodierverfahren nach einem der Ansprüche 1 bis 7, **dadurch gekennzeichnet, dass** der Schritt zum Kodieren der Topologie (2932) einen, Geistercode genannten, spezifischen Code zum Kodieren der Netzwerkränder erzeugt,
wobei ein am Rand des Netzwerkes liegender jeweils geltender Drehpunktknoten eine virtuelle Kante einnimmt, die ihn mit einem, dem Geistercode assoziierten Geisterknoten verbindet, um die Kontureninformation zu erhalten, die mit den Knoten zusammenhängt, welche mit dem jeweils geltenden Drehpunktknoten benachbart sind.

9. Kodierverfahren nach den Ansprüchen 7 oder 8, **dadurch gekennzeichnet, dass** die folgenden Werte in der aktiven Liste möglich sind:
- ganze Zahlen, die größer oder gleich 4 sind: Valenz eines Knotens, um eine Einheit verschoben;
- 0: Code, der das Einfügen eines Vorkommens des erwähnten Geisterknotens angibt;
- 1: Code, der das Aufteilen der aktiven Liste in zwei Listen angibt;
- 2: Code, der das Zusammenlegen zweier Listen angibt;
- 3: Code, der das Vorhandensein eines Kontext-vollständigen Knotens angibt.

10. Verfahren nach einem der Ansprüche 1 bis 9, **dadurch gekennzeichnet, dass** der Schritt zum Kodieren der Topologie (2932) einen Auswahlschritt des ersten, Auslöserknotens genannten, Drehpunktknotens umfasst, wobei man als Auslöserknoten einen Knoten wählt, der auf dem Rande des Netzwerkes liegt, falls dieser Rand vorhanden ist.

11. Kodierverfahren nach Anspruch 10, **dadurch gekennzeichnet, dass** der erwähnte Auslöserknoten derjenige unter der Menge der Knoten am Rande des Netzwerkes (oder im Netzwerk, beim Fehlen eines Randes) ist, der die höchste Valenz aufweist.

12. Kodierverfahren nach einem der Ansprüche 3 bis 10, **dadurch gekennzeichnet, dass** die in der aktiven Liste enthaltenen Werte mit Hilfe eines entropischen Coders (305) mit adaptativem Modell kodiert werden.

13. Kodierverfahren nach Anspruch 12, **dadurch gekennzeichnet, dass** die Zahl 2 systematisch von den Sprungwerten in der Aufteilungsposition der vom bereits erwähnten entropischen Coder (305) kodierten Listen subtrahiert wird.

14. Verfahren nach einem der Ansprüche 1 bis 13, **dadurch gekennzeichnet, dass** der Schritt zum Kodieren der Positionen (2933) eine Kodierung durch Vorhersage der Position eines gegebenen Knotens als Funktion der Position vorher kodierter Knoten anwendet.

15. Kodierverfahren nach Anspruch 14, **dadurch gekennzeichnet, dass** der Schritt zum Vorhersagen der Position mindestens eine der Vorhersagen aus der folgenden Gruppe verwendet:
- eine Vorhersage nach der Parallelogrammmethode, wenn der betrachtete Knoten einem schwingenden Gebiet angehört;
- eine lineare Vorhersage, wenn der betrachtete Knoten einem regelmäßigen Bereich angehört;
- eine einfache Differenz, wenn keine der zwei vorherigen Vorhersagen die Auslenkung des Restwertes verringert;
- einen Störfallcode, um Abbrüche der Adjazenz anzuzeigen.

16. Kodierverfahren nach einem der Ansprüche 14 oder 15, **dadurch gekennzeichnet, dass** der Schritt zum Kodieren der Positionen ein Kodieren der, Vorhersagenrestwerte genannten, Restwerte nach der Vorhersage anwendet.

17. Kodierverfahren nach Anspruch 16, **dadurch gekennzeichnet, dass** der Schritt zum Kodieren der Vorhersagenrestwerte diese Restwerte mit Hilfe einer gleitenden Durchschnittsberechnung nach aufeinanderfolgende Kantenlängen normiert.

18. Kodierverfahren nach Anspruch 17, **dadurch gekennzeichnet, dass** der gleitende Durchschnitt über die Längen von N Kanten berechnet wird, welche mit den Positionswerten der Knoten assoziiert sind, die vor dem Knoten liegen, dessen Position kodiert werden soll.

19. Verfahren nach einem der Ansprüche 14 bis 18, **dadurch gekennzeichnet, dass** der Schritt zum Kodieren der Positionen (2933) einen Quantifizierungsschritt der Absolutwerte der Vorhersagenrestwerte anwendet, wobei die Vorzeichenbits dieser Vorhersagenrestwerte unabhängig voneinander, ohne Kompression übertragen werden.

20. Kodierverfahren nach Anspruch 19, **dadurch gekennzeichnet, dass** der Anwenders der Präzision in Zahl der erwünschten Bits, für jeden der Vorhersagenrestwerte berücksichtigt, um eine erste, mehr oder wenig grobe, Abschätzung des Netzwerkes zu erhalten.

21. Kodierverfahren nach einem der Ansprüche 16 bis 20, **dadurch gekennzeichnet, dass** der Schritt zum Kodieren der Positions-Vorhersagenrestwerte ein entropisches Kodieren der erwähnten Restwerte anwendet, das dem beim erwähnten Schritt zum Kodieren der Topologie angewandten entropischen Kodieren ähnlich ist.

22. Kodierverfahren nach einem der Ansprüche 15 bis 21, **dadurch gekennzeichnet, dass** die erwähnten Störfälle in Form eines ganzzahligen Verhältnisses eines Vektors kodiert werden, welcher nahe beim gleitenden Vektordurchschnitt (la moyenne vectorielle mobile) liegt sowie eines assoziierten Restwertes, der als Differenzrestwert kodiert wird, wobei diese ganzzahligen Verhältnisse durch entropisches Kodieren komprimiert werden.

23. Kodierverfahren nach einem der Ansprüche 16 bis 22, **dadurch gekennzeichnet, dass** die Differenz zwischen den exakten Restwerten der Positionsvorhersagen und den, Differentialrestwerte genannten, quantifizierten Restwerten der Positionsvorhersagen, berücksichtigt wird.

24. Kodierverfahren nach Anspruch 23, **dadurch gekennzeichnet, dass** folgende Schritte ausgeführt werden:
- Normierung der Differentialrestwerte zwischen 0 und 1;
- unabhängige und kompressionslose Übertragung der Vorzeichenbits der Differentialrestwerte;
- binäre Entwicklung der normierten Differentialrestwerte für jeden der Absolutwerte.

25. Kodierverfahren nach einem der Ansprüche 16 bis 24, **dadurch gekennzeichnet, dass** der Schritt zum Kodieren der Differentialrestwerte die Position der ersten 1, die in einer jeden der erwähnten binären Entwicklungen der Differentialrestwerte angetroffen wird, oder Größenordnung, bestimmt und eine entropische Kodierung dieser Größenordnungen anwendet.

26. Kodierverfahren nach einem der Ansprüche 24 oder 25, **dadurch gekennzeichnet, dass** die aufeinanderfolgenden Verfeinerungsschritte darin bestehen, die Verfeinerungsbits der Differentialrestwerte durch komplettes Abschreiten der Knoten der Reihenfolge nach, ein Bit je Knoten, zu übertragen.

27. Kodierverfahren nach Anspruch 26, **dadurch gekennzeichnet, dass** für jede Verfeinerungsebene die Menge der einer Größenordnung entsprechenden Verfeinerungsbits übertragen wird.

28. Verfahren zum Dekodieren von mit Hilfe des Kodierverfahrens nach einem der Ansprüche 1 bis 27 kodierten Daten, **dadurch gekennzeichnet, dass** es einen Schritt zum Dekodieren der Position der Knoten umfasst, gefolgt von einem Schritt zum Dekodieren der Topologie.

29. Dekodierverfahren nach Anspruch 28, **dadurch gekennzeichnet, dass** der Dekodierungsschritt der Position der Knoten einen Schritt zum Dekodieren der Positionen der drei ersten Knoten umfasst, gefolgt von einem Schritt zum Dekodieren der quantifizierten Vorhersagenrestwerte der anderen Knoten.

30. Dekodierverfahren nach einem der Ansprüche 28 oder 29, **dadurch gekennzeichnet, dass** der erwähnte Schritt zum Dekodieren der Topologie den spezifischen Code berücksichtigt, der den Kontext-vollständigen Knoten zugeordnet ist, um die erwähnte Topologie wiederherzustellen, ohne Information bezüglich der Adjazenz zwischen Flächen/Knoten/Kanten.

31. Dekodierverfahren nach einem der Ansprüche 29 oder 30, **dadurch gekennzeichnet, dass** der Schritt zum Dekodieren der Positionsrestwerte der Knoten einen geometrischen Verfeinerungsschritt anwendet, bei dem nacheinander die Präzision der Position der besagten Knoten verfeinert wird.

32. Dekodierverfahren nach Anspruch 31, **dadurch gekennzeichnet, dass** der Schritt zum Dekodieren der Positionsrestwerte der Knoten systematisch einer jeden laufenden binären Entwicklung des soeben empfangenen Binärzuges das Bit 1 hinzufügt, um die Qualität der laufenden Wiederherstellung des Netzwerkes zu verbessern.
